Europäisches Patentamt

European Patent Office

Office européen des brevets

(19)

(11) **EP 0 777 194 B1**

(12) **FASCICULE DE BREVET EUROPEEN**

(45) Date de publication et mention
de la délivrance du brevet:
**17.04.2002 Bulletin 2002/16**

(51) Int Cl.⁷: **G06K 7/10**, G06K 7/08

(21) Numéro de dépôt: **96402556.3**

(22) Date de dépôt: **27.11.1996**

(54) **Procédé d'interrogation à distance d'étiquettes, station et étiquettes pour sa mise en oeuvre**

Verfahren zur Fernabfrage von Karten, Station und Karten zu dessen Durchführung

Procedure for interrogating cards at a distance, station and cards for its implementation

(84) Etats contractants désignés:
**AT BE CH DE ES FI FR GB IT LI LU NL SE**

(30) Priorité: **01.12.1995 FR 9514251**

(43) Date de publication de la demande:
**04.06.1997 Bulletin 1997/23**

(60) Demande divisionnaire:
**01119909.8 / 1 168 230**

(73) Titulaire: **RAIMBAULT, Pierre**
**F-75008 Paris (FR)**

(72) Inventeurs:
• **Raimbault, Pierre**
**75008 Paris (FR)**
• **Goupil, Jean**
**78740 Vaux Sur Seine (FR)**

(74) Mandataire: **Pochart, François et al**
**Cabinet Hirsch,**
**34, rue de Bassano**
**75008 Paris (FR)**

(56) Documents cités:
**EP-A- 0 669 591          US-A- 4 071 908**

**Description**

L'invention a pour objet un procédé automatique d'identification à distance d'étiquettes électroniques présentant chacune un code propre formé de chiffres, à partir d'une station.

Elle concerne aussi une station d'identification à distance d'étiquettes électroniques présentant chacune un code propre formé de chiffres et un index représentatif d'un rang dans ce code, notamment pour la mise en oeuvre de ce procédé.

Elle a pour objet une étiquette électronique présentant des moyens de communication avec une station, pour recevoir des interrogations de la station et pour émettre des réponses vers la station, des moyens de contrôle et de stockage d'un code formé de chiffres, notamment pour la mise en oeuvre de ce procédé.

L'invention concerne aussi une combinaison d'une telle station et de telles étiquettes.

L'invention concerne généralement le domaine de l'interrogation à distance d'étiquettes électroniques à partir d'une station ou portique. Elle est susceptible d'applications nombreuses, dans des secteurs très divers. On citera par exemple:

- le contrôle, la comptabilisation et/ou la vérification d'articles achetés par un chaland dans une grande surface, et munis d'étiquettes électroniques;
- le comptage d'objets munis d'étiquettes, pour la gestion de stock dans une usine ou dans une installation industrielle;
- la reconnaissance et l'orientation d'objets munis d'étiquettes, tels que par exemple des valises dans un aéroport;
- la reconnaissance du passage d'objets munis d'une étiquette, comme par exemple des voitures à un péage, et l'échange d'informations avec les objets;
- le contrôle de l'accès à une installation ou le suivi de l'accès à une installation de personnes porteuses d'une telle étiquette électronique, etc.

D'autres applications sont possibles.

Dans toute la suite de la présente description, on emploiera simplement le terme "étiquette" pour désigner une étiquette électronique, indépendamment de son support et de son utilisation.

On utilisera généralement le terme de "portique" ou "station" pour désigner la station interrogatrice; la forme de cette station n'est pas limitée à la forme physique d'un portique.

On appelle interrogation, scrutation ou sondage, ou en anglais "polling" ou "probing" le fait pour le portique d'interroger les étiquettes pour si nécessaire échanger des informations avec elles.

Il existe déjà des systèmes d'interrogation à distance d'étiquettes comportant un code.

Le document FR-A-2 648 593 décrit un procédé et un dispositif de comptabilisation d'articles, dans lequel il est proposé d'interroger séquentiellement des étiquettes portant un code, en émettant successivement des signaux d'interrogation correspondant aux premier, deux premiers, trois premiers etc, bits possibles du code des étiquettes. Dans ce document, seules répondent les étiquettes dont le début du code correspond au signal d'interrogation.

Le document EP-A-0 161 779 propose un système d'identification dans lequel des transpondeurs porteurs d'un code propre répondent à un signal d'interrogation de la station. Les données émises par chaque transpondeur sont de longueur prédéterminée et comportent un code correcteur d'erreur; la station peut ainsi détecter le cas de collision des réponses, i.e. de réponses simultanées ou chevauchantes de transpondeurs différents. Si la station ne détecte aucune erreur, elle retransmet le code qu'elle a reçu; ce signal est comparé par le transpondeur avec son code propre; en cas d'identité le transpondeur envoie un signal de reconnaissance, et se met en veille; sinon, il se met en veille pour un nombre aléatoire de cycles, avant de recommencer à émettre.

Le document EP-0 242 906 propose un système d'identification d'étiquettes, ne pouvant apparemment fonctionner qu'avec une seule étiquette, et dans lequel il est suggéré de reprogrammer l'étiquette pendant des intervalles prédéterminés du signal émis par la station, après la reconnaissance de l'étiquette.

Le document EP-A-0 494 114 propose un système d'identification électronique, dans lequel les étiquettes répondent après un intervalle de temps aléatoire, du genre de celui de EP-A-0 161 779.

Le document EP-A-0 495 708 propose un système de communication entre une borne et des mobiles, dans lequel les mobiles répondent à un signal d'interrogation dans une fenêtre temporelle qui dépend du premier chiffre de leur code; le signal de réponse des étiquettes est du type de celui de EP-A-0 161 779, de sorte à permettre une gestion des collisions.

Par ailleurs, le document US-A-4 071 908 décrit un système de polling de terminaux sur une ligne, dans un contexte totalement différent de celui de l'invention, et mettant en oeuvre un principe analogue à celui du document FR-A-2 648 593. Le contexte du polling dans ce document américain implique des fréquences bien plus élevées que celles habituellement utilisées pour les étiquettes, et le problème de l'optimisation de la durée des transmissions ne se pose pas. Dans ce document, l'interrogation consiste à envoyer un code complet. Par ailleurs, la méthode proposée dans ce document n'a de sens que si l'on connaît le nombre de stations du système.

Le document EP-A-0 669 591 décrit un système de transmission d'information à distance. Dans ce document, il est proposé de déterminer successivement si un transpondeur se trouve dans une moitié de l'ensemble des étiquettes, et si c'est le cas, de diviser à nouveau en deux l'ensemble, jusqu'à ce qu'il ne comprenne plus qu'un seul transpondeur. A chaque question, les transpondeurs répondent en émettant leur code, suivi d'un code de correction d'erreurs. Ce document ne suggère pas de méthode autre que la dichotomie, et ne propose pas de déterminer s'il existe des étiquettes présentant un des chiffres possibles à un rang de leur code. Il n'est pas suggéré non plus de bloquer les étiquettes, et de fait, ceci ne serait pas utile à cause de la présence de codes de correction d'erreur.

Le document FR-A-2 677 135 décrit un procédé d'interrogation à distance d'étiquettes présentant un code binaire. Il est proposé dans ce document d'interroger les étiquettes à chaque étape en utilisant des questions fonction de l'étape précédente. Le procédé de ce document ne fonctionne pas pour des codes non binaires, et ne peut pas être envisagé simplement pour des codes non binaires. En binaire, ce procédé implique un balayage complet de l'ensemble du code, depuis son premier chiffre jusqu'à son dernier, ce qui peut s'avérer pénalisant en durée d'interrogation.

Ces systèmes présentent des inconvénients.

Ils permettent difficilement de répondre au problème technique de l'interrogation simultanée et rapide d'un grand nombre d'étiquettes. De fait, ils nécessitent souvent des messages longs, de la part de la station comme de la part des étiquettes, ce qui notamment pour des fréquences basses, allonge le temps total d'interrogation.

La gestion des collisions entre les réponses multiplie les échanges et allonge la durée d'interrogation; l'utilisation de durées aléatoires augmente le temps d'interrogation total pour un grand nombre d'étiquettes. Se pose en outre le problème de la génération des nombres aléatoires, notamment dans le cas d'un grand nombre d'étiquettes identiques.

Ils ne permettent pas une interrogation rapide des étiquettes, s'adaptant à toutes les configurations possibles des codes des étiquettes.

L'invention apporte une solution au problème de l'interrogation simultanée et rapide d'un grand nombre d'étiquettes.

Elle permet d'interroger un grand nombre d'étiquettes en une durée totale moindre que celle des systèmes connus; elle fonctionne aussi bien pour un nombre d'étiquettes plus réduit.

L'invention apporte aussi une solution originale pour l'interrogation d'un grand nombre d'articles comportant des codes similaires.

Enfin, l'invention se propose de résoudre le problème nouveau d'une lecture ou d'une écriture à un rang donné du code des étiquettes.

Pour cela, l'invention propose un procédé automatique d'identification à distance d'étiquettes électroniques présentant chacune un code propre formé d'une pluralité de chiffres en une pluralité de rangs, à partir d'une station, dans lequel l'identification d'une étiquette comprend les étapes consistant à

- (a) pour un rang du code, déterminer s'il existe des étiquettes présentant un des chiffres possibles à un rang de leur code;
- (b) pour ce rang, si ce rang est avant le dernier rang, s'il en existe pour un chiffre donné, stocker ce chiffre, bloquer temporairement les autres étiquettes qui n'ont pas ce chiffre donné à ce rang et repasser à l'étape (a) pour le rang suivant;
- (c) si ce rang est le dernier rang, s'il en existe pour un chiffre donné, stocker ce chiffre, et reconstituer le code de l'étiquette à l'aide des chiffres stockés.

L'étape consistant à déterminer s'il existe des étiquettes présentant un des chiffres possibles à un rang de leur code peut comprendre l'émission de la station vers les étiquettes d'interrogations successives de test de la présence d'un chiffre à ce rang du code.

Cette étape peut alternativement comprendre l'émission de la station vers les étiquettes d'une interrogation, chacune des étiquettes émettant une réponse dans une fenêtre temporelle fonction du chiffre que son code comporte à ce rang.

Dans ce cas, on peut mettre en oeuvre l'étape (b) dès que la station a reçu au moins une réponse, sans attendre d'autres réponses.

L'étape consistant à déterminer s'il existe des étiquettes présentant un des chiffres possibles à un rang de leur code peut avantageusement comprendre:

- une étape consistant à déterminer s'il existe des étiquettes présentant à un rang de leur code un chiffre compris dans un ensemble de chiffres;
- s'il en existe, une étape consistant à déterminer s'il existe des étiquettes présentant un des chiffres dudit ensemble à ce rang de leur code; et

- s'il n'en existe pas, une étape consistant à déterminer s'il existe des étiquettes présentant un des chiffres de l'ensemble complémentaire dudit ensemble à ce rang de leur code.

Dans ce cas, ledit ensemble contient de préférence la moitié des chiffres possibles.

Si le code comprend des chiffres en base 10, l'ensemble de chiffres peut comprendre les chiffres {0, 1, 2, 3, 4} ou {5, 6, 7, 8, 9}.

L'étape consistant à déterminer s'il existe des étiquettes présentant un des chiffres possibles à un rang de leur code peut aussi comprendre:

- au moins deux étapes consistant à déterminer s'il existe des étiquettes présentant à un rang de leur code un chiffre compris dans un ensemble de chiffres, l'ensemble dans une étape présentant un cardinal inférieur à l'ensemble dans l'étape précédente;
- une étape consistant à déterminer s'il existe des étiquettes présentant un des chiffres de l'ensemble correspondant à la dernière desdites deux étapes.

Si le code comprend par exemple des chiffres en base 10, le procédé peut comprendre

- une étape consistant à déterminer s'il existe des étiquettes présentant à un rang de leur code un chiffre compris dans l'ensemble {0, 1, 2, 3, 4};
- si le résultat de cette première étape est positif, une étape consistant à déterminer s'il existe des étiquettes présentant à un rang de leur code un des chiffres des ensembles {0,1,2}, {3,4};
- si le résultat de la première étape est négatif, une étape consistant à déterminer s'il existe des étiquettes présentant un des chiffres des ensembles {5, 6}, {7, 8, 9}.

Dans un mode de mise en oeuvre, le procédé comprend, pendant ou après l'étape (c),

- une étape (d) consistant à débloquer les étiquettes bloquées temporairement, à bloquer l'étiquette dont le code a été reconstitué et à repasser au premier rang, le procédé repassant ensuite à l'étape (a) pour l'identification de l'étiquette suivante.

L'étape (c) peut consister en outre à bloquer l'étiquette dont le code a été reconstitué.

Dans ce cas, le procédé peut ensuite comprendre la répétition des étapes (a) et (c) pour identifier les autres étiquettes dont le code ne diffère que sur le dernier chiffre.

Le procédé peut comprendre les étapes consistant à

- (e) repasser au rang précédent, et débloquer celles des étiquettes qui ont été bloquées temporairement au rang précédent;
- (f) déterminer s'il existe des étiquettes présentant un des chiffres possibles à un rang de leur code; et repasser à l'étape (b) si c'est le cas, et si ce n'est pas le cas, repasser à l'étape (e).

Dans ce cas, le nombre d'itérations successives de l'ensemble des étapes (e) et (f) est de préférence limité, et lorsque ce nombre limité est atteint, est mise en oeuvre une étape (g) consistant à débloquer les étiquettes bloquées temporairement, ct à repasser au premier rang, le procédé repassant ensuite à l'étape (a) pour l'identification de l'étiquette suivante.

Dans un mode de mise en oeuvre du procédé, lors de l'identification d'une étiquette, la station n'émet pas de nouveau les interrogations pour lesquelles elle n'a reçu aucune réponse des étiquettes lors de l'identification des étiquettes précédentes.

Avantageusement, si l'on utilise des fenêtres temporelles de réponse, lors de l'identification d'une étiquette, la station n'émet pas les interrogations correspondant aux fenêtres temporelles dans lesquelles elle n'a pas reçu de réponse des étiquettes lors des étapes d'interrogation des étiquettes précédentes

On peut prévoir que lors de l'identification d'une étiquette, la station émet vers les étiquettes des interrogations successives de test de la présence à un rang des étiquettes du chiffre du rang correspondant du code de l'étiquette identifiée auparavant, tant que les réponses des étiquettes sont les mêmes que lors de l'identification de l'étiquette précédente.

L'interrogation des étiquettes peut comprendre une étape d'écriture dans le code des étiquettes.

L'interrogation des étiquettes peut aussi commencer à un rang du code autre que le premier.

L'invention a aussi pour objet une station d'identification à distance d'étiquettes électroniques présentant chacune un code propre formé d'une pluralité de chiffres en une pluralité de rangs et un index représentatif d'un rang dans ce code, notamment pour la mise en oeuvre du procédé selon l'invention, comprenant des moyens d'émission d'interrogations vers les étiquettes, des moyens de réception des réponses des étiquettes, et des moyens de contrôle des interrogations, les interrogations comprenant:

- une interrogation mettant les étiquettes dans un état de début d'analyse (D);
- une interrogation d'avance (A) de la position de l'index des étiquettes;
- au moins une interrogation permettant de déterminer la présence d'un chiffre donné au rang du code des étiquettes correspondant à l'index.

Dans un mode de réalisation, les interrogations comprennent autant d'interrogations (0), ... (9), (N) permettant de déterminer la présence d'un chiffre donné au rang du code des étiquettes correspondant à l'index qu'il existe de chiffres dans la base des chiffres du code des étiquettes.

Les interrogations peuvent en outre comprendre des interrogations permettant de déterminer si un chiffre donné au rang du code des étiquettes correspondant à l'index appartient à un ensemble.

Les moyens de réception des réponses des étiquettes peuvent comprendre des moyens de définition de plages temporelles de réception différentes pour recevoir des réponses correspondant à des valeurs différentes du chiffre des étiquettes.

Dans un mode de réalisation, les interrogations comprennent une interrogation (B) de blocage des étiquettes.

Les interrogations peuvent encore comprendre une interrogation (Z) de remise à zéro de l'index des étiquettes et de test de présence d'étiquettes non bloquées.

Dans un autre mode de réalisation, les interrogations comprennent une interrogation (R) de recul d'un rang de l'index des étiquettes.

Avantageusement, les moyens de contrôle comprennent des moyens de stockage des interrogations permettant de déterminer la présence d'un chiffre donné au rang du code des étiquettes correspondant à l'index pour lesquelles aucune réponse des étiquettes n'est reçue.

L'invention a encore pour objet une étiquette électronique présentant des moyens de communication avec une station, pour recevoir des interrogations de la station et pour émettre des réponses vers la station, des moyens de contrôle et de stockage d'un code formé d'une pluralité de chiffres en une pluralité de rangs, notamment pour la mise en oeuvre du procédé selon l'invention, ladite étiquette présentant au moins un premier état de blocage, un deuxième état de blocage temporaire, et un troisième état dans lequel elle peut émettre des réponses, ladite étiquette comprenant un index représentatif d'un rang dans son code, les moyens de contrôle permettant de changer l'index sur interrogation de la station et permettant d'émettre sur interrogation de la station un signal indicatif de la présence d'un chiffre donné à un rang du code fonction de l'index.

Dans un mode de réalisation, les moyens de contrôle comprennent des moyens de temporisation des réponses en fonction du chiffre lu à l'adresse définie par l'index, de telle sorte que les plages temporelles démission correspondent à des valeurs différentes du chiffre.

Dans un autre mode de réalisation, l'étiquette comprend et une mémoire de stockage (*adr_non_reco*) d'un rang de son code, fonction du rang du premier chiffre non reconnu.

Les moyens de stockage du code dans l'étiquette présentent de préférence une zone de stockage représentative de la taille d'une partie du code protégée. Dans ce cas, ladite zone de stockage n'est de préférence susceptible d'être modifiée qu'une seule fois.

Enfin, l'invention a pour objet une combinaison d'une telle station et d'au moins une telle étiquette.

D'autres avantages et caractéristiques de l'invention apparaîtront à la lecture de la description qui suit de différents modes de réalisation, donnés à titre d'exemple et en référence aux figures annexées, qui montrent:

- figure 1 un schéma de principe d'une étiquette électronique;
- figure 2 un schéma de principe d'une station ou portique d'interrogation;
- figure 3, un ordinogramme des tests à un rang donné, selon un mode de réalisation de l'invention;
- figure 4, un ordinogramme des tests à un rang donné, selon un autre mode de réalisation de l'invention;
- figure 5, un ordinogramme des tests à un rang donné, selon un encore autre mode de réalisation de l'invention ;
- figure 6, un chronogramme d'une séquence d'identification dans un mode de réalisation de l'invention.

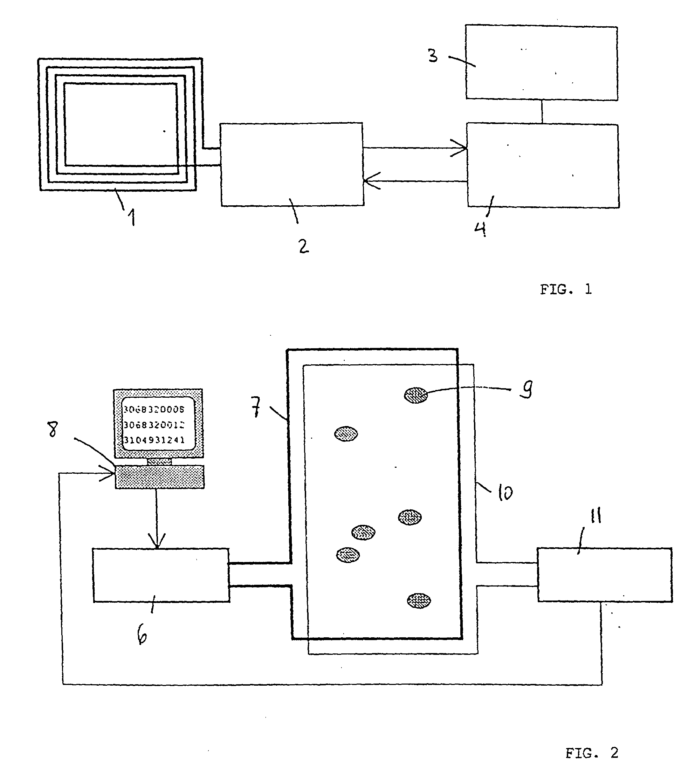

La figure 1 montre un schéma de principe d'une étiquette électronique, susceptible d'être utilisée pour la mise en oeuvre de la présente invention.

L'étiquette de la figure 1 comporte un circuit intégré spécifique - une "puce" -, des moyens de communication avec une station ou portique, par exemple par voie radio ou par induction, ainsi que des moyens d'alimentation en énergie; cette alimentation peut comprendre une pile, une borne de connexion à une source d'énergie, ou un dispositif à induction. Il est notamment possible d'utiliser des étiquettes actives, dans le cas où l'étiquette est conçue pour être utilisée avec un système présentant une source d'énergie, comme par exemple une voiture ou autre.

Avantageusement, les moyens de communication et d'alimentation en énergie peuvent comprendre un bobinage unique 1, qui remplit alors trois fonctions distinctes:

- capter, par induction, l'énergie nécessaire au fonctionnement de la puce, de sorte à constituer une alimentation en énergie;
- recevoir les instructions et questions provenant de la station ou du portique;
- transmettre les réponses de l'étiquette.

Dans le mode de réalisation de la figure 1, la puce comprend aussi :

- des circuits analogiques 2 qui contrôlent la tension d'alimentation provenant du bobinage 1, mettent en forme les instructions reçues et modulent le courant dans le bobinage 1, lorsqu'une réponse doit être émise;
- une mémoire 3 du code, par exemple sur 64 chiffres;
- des circuits logiques 4 qui élaborent la réponse de l'étiquette en fonction des questions posées par la station et de la valeur du code contenu dans la mémoire 3.

La mémoire 3 peut être constituée d'une ROM; elle peut aussi avantageusement comprendre une EEPROM ou EPROM, ou mémoire FLASH, ou tout autre moyen de mémorisation, ou encore une RAM dans le cas d'une alimentation permanente; dans certains cas, le code peut être modifié, si nécessaire, lors de l'interrogation.

L'étiquette de la figure 1 présente les fonctionnalités nécessaires à la mise en oeuvre de l'invention: possibilité de communication à distance avec la station, en réception ou en émission; conservation d'un code, éventuellement reprogrammable; élaboration des réponses de l'étiquette en fonction des questions reçues depuis la station.

On peut avantageusement utiliser pour la mise en oeuvre de l'invention les étiquettes décrites dans la demande de brevet EP-A-0 777 193 de la demanderesse déposée le même jour que la présente demande, sous le titre: "Circuit d'alimentation et de modulation pour une étiquette interrogeable à distance".

Le procédé de l'invention peut aussi être mis en oeuvre, de façon plus générale, avec tout type d'étiquette interrogeable à distance. D'autres étiquettes sont ainsi décrites dans les brevets précités de l'art antérieur.

La figure 2 montre un schéma de principe d'une station ou portique d'interrogation, susceptible d'être utilisé pour la mise en oeuvre de la présente invention, avec des étiquettes du type de celle de la figure 1.

La station de la figure 2 comprend un émetteur 6, qui envoie dans un inducteur 7 un courant à haute fréquence; si nécessaire, pour des étiquettes "passives", sans alimentation permanente, ce courant présente une puissance suffisante pour alimenter toutes les étiquettes placées dans le volume de lecture de la station.

La station comprend des moyens de contrôle 8, tels que par exemple un ordinateur classique du type PC ou équivalent. Ces moyens de contrôle envoient vers l'émetteur 6 des instructions de modulation du courant, pour l'émission de questions vers les étiquettes 9.

Parallèlement au bobinage inducteur, la station comprend une boucle de lecture 10 qui capte les réponses des étiquettes 9. Les signaux de réponse sont amplifiés et mis en forme par un récepteur 11 et reviennent aux moyens de contrôle.

La station de la figure 2 présente les fonctionnalités nécessaires à la mise en oeuvre de l'invention: possibilité de communication à distance avec les étiquettes, en réception grâce à la boucle de lecture ou en émission grâce à l'inducteur; élaboration des questions aux étiquettes en fonction des réponses reçues depuis celles ci; traitement des résultats, en fonction de l'application.

Le procédé de l'invention peut être mis en oeuvre à l'aide d'autres stations d'interrogation, comme ceux qui sont décrits dans les documents précités de l'art antérieur.

On peut avantageusement utiliser pour la mise en oeuvre de l'invention la station ou portique décrit dans la demande de brevet EP-A-0 777 192 de la demanderesse déposée le même jour que la présente demande, sous le titre: "Procédé de mise en phase d'étiquettes électroniques, station d'interrogation et étiquette électronique pour sa mise en oeuvre".

En tout état de cause, l'invention peut être mise en oeuvre avec des stations et étiquettes permettant simplement la communication à distance.

Selon l'invention, on propose de procéder à l'identification du code propre de chaque étiquette de la façon suivante:

- (a) pour un rang du code, on détermine s'il existe des étiquettes présentant un des chiffres possibles à un rang de leur code;
- (b) pour ce rang, si ce rang est avant le dernier rang, s'il en existe pour un chiffre donné, stocker ce chiffre, on bloque temporairement les autres étiquettes qui n'ont pas ce chiffre donné à ce rang et on repasse à l'étape (a) pour le rang suivant;

- (c) si ce rang est le dernier rang, s'il en existe pour un chiffre donné, on stocke ce chiffre, et on reconstitue le code de l'étiquette à l'aide des chiffres stockés.

En terme d'arbre binaire (pour un code à chiffre binaire) ou m-aire (pour un code à chiffres en base m), ceci revient à parcourir l'arbre au premier niveau, puis à passer au deuxième niveau dès qu'on a trouvé une étiquette, etc. En arrivant au niveau des feuilles de l'arbre, on a trouvé une étiquette.

On décrit maintenant un premier mode de réalisation de l'invention. On convient d'appeler interrogations les émissions depuis la station vers les étiquettes, et réponses les émissions depuis les étiquettes vers la station.

La station est susceptible d'émettre les interrogations suivantes.

La station peut émettre une première interrogation de début d'analyse, notée (D) dans la suite.

La station peut émettre des interrogations de test; elle peut émettre autant d'interrogations de test qu'il existe de chiffres possibles dans la base dans laquelle le code des étiquettes est noté.

Enfin la station peut émettre une interrogation d'avance de l'index des étiquettes

Chaque étiquette comprend un code propre, présentant un certain nombre de chiffres, dans une base donnée.

Chaque étiquette présente plusieurs états, et plus précisément au moins trois états. Dans un premier état ou état de blocage, l'étiquette a déjà été reconnue par la station et ne répond plus.

Lorsqu'elle n'est pas dans l'état de blocage, l'étiquette peut être dans un deuxième état ou état de blocage temporaire dans lequel elle considère qu'elle n'est plus reconnue par la station, et qu'elle doit attendre un ordre de début d'analyse. L'étiquette peut aussi être dans un troisième état ou état de réponse, dans lequel elle se considère encore comme reconnue par la station, et est susceptible de répondre aux interrogations de la station.

Dans un mode de réalisation de l'étiquette, l'état bloqué ou non bloqué de l'étiquette est noté par la valeur 1 ou 0 d'une variable **blocage**; cette variable peut correspondre à l'état d'un bistable dans les circuits logiques de l'étiquette.

Dans un mode de réalisation, l'état représentatif du fait que l'étiquette est ou non reconnue, à un instant donné est noté par la valeur 1 ou 0 d'une variable reco; cette variable peut correspondre aussi à l'état d'un bistable dans les circuits logiques de l'étiquette.

Dans ce cas, les états de blocage, de blocage temporaire et de réponse correspondent aux valeurs suivantes des couples (**blocage, reco**): (1, 0) ou (1, 1), (0, 0) et (0, 1).

Chaque étiquette comprend un index indiquant un rang donné de son code, qui correspond au rang en cours d'analyse dans le processus d'interrogation. On note cet index dans la suite **index**; la valeur de l'**index** dans une étiquette varie entre 0, correspondant à l'analyse du premier chiffre du code, et n-1, correspondant à l'analyse du dernier chiffre du code, n étant le nombre de chiffres du code.

Chaque étiquette est en outre susceptible de répondre aux interrogations de la station en émettant une réponse d'un type unique, dans les conditions expliquées plus bas. Ce signal est conçu de telle sorte qu'il puisse être perçu par la station, quel que soit le nombre d'étiquettes répondant.

On peut ainsi mettre en oeuvre le procédé de l'invention de la façon suivante.

Au début d'une séquence d'analyse ou de recherche, la station émet une interrogation D, ce qui a pour effet de mettre à 0 l'ensemble des **index** des étiquettes, ainsi que les variables blocage, et de mettre à 1 les variables reco.

La station émet ensuite successivement des interrogations de test, correspondant à différentes valeurs possibles du premier chiffre du code des étiquettes, en attendant après chaque test une réponse des étiquettes.

Une étiquette donnée répond à une interrogation de test par un signal BIP si le chiffre de son code correspondant à l'index, i.e. le premier chiffre, a une valeur qui correspond à l'interrogation de test.

Lorsque la station reçoit un BIP, elle sait qu'il existe au moins une étiquette dont le premier chiffre du code est celui du test qui vient d'être émis.

Ce chiffre est stocké et la station envoie un signal A d'avance.

Lorsque les étiquettes reçoivent le signal d'avance, leur index passe de 0 à 1. En outre, le bistable **reco** des étiquettes autres que celles qui ont répondu à la dernière interrogation de test passe de 1 à 0. C'est-à-dire que toutes les étiquettes dont le premier chiffre de code n'est pas égal au premier chiffre stocké passent en état de blocage temporaire.

La recherche se poursuit alors pour le deuxième chiffre: la station émet successivement des interrogations de test, correspondant à différentes valeurs possibles du deuxième chiffre du code des étiquettes, en attendant après chaque test une réponse des étiquettes.

Une étiquette donnée répond à une interrogation de test par un signal BIP si le deuxième chiffre de son code a une valeur qui correspond à l'interrogation de test.

Lorsque la station reçoit un BIP, elle sait qu'il existe au moins une étiquette dont le deuxième chiffre du code est celui du test qui vient d'être émis.

Ce deuxième chiffre est stocké et la station envoie un signal A d'avance.

Le processus se répète autant de fois qu'il existe de chiffres dans le code d'une étiquette.

Lorsque l'index pointe sur le dernier chiffre du code, et qu'une étiquette répond à un test, la station a stocké l'ensemble des chiffres d'une étiquette, c'est-à-dire qu'elle a reconnu la présence dans le champ d'analyse d'une étiquette d'un code donné.

La station émet alors un signal d'avance, et l'étiquette dont le code vient d'être reconnu passe en état de blocage.

L'émission du signal d'avance après l'interrogation sur le dernier rang a aussi pour effet de faire passer à l'état de réponse toutes les étiquettes qui sont en état de blocage temporaire. Enfin le signal d'avance fait passer l'index du dernier chiffre du code au premier (**index**=0).

On comprend qu'on se retrouve à ce moment dans un situation analogue à celle existant juste après l'émission du signal D: toutefois, une étiquette a été reconnue, et se trouve dans un état de blocage définitif.

Le processus de recherche peut être répété jusqu'à la reconnaissance de la dernière étiquette.

La station sait que le processus de recherche est terminé lorsqu'elle n'a reçu aucune réponse à toutes les interrogations de test émises pour le premier chiffre de code. A cet instant, le processus d'interrogation est interrompu, et toutes les étiquettes du champ ont été reconnues.

Le tableau de l'annexe 1 donne un exemple de succession des interrogations et des réponses pour un code de trois chiffres en base 10, pour trois étiquettes. On note (0) à (9) les dix interrogations de test.

On comprend ainsi que l'invention permet, avec des messages d'une longueur minimale, et en nombre très restreint, de reconnaître en une durée réduite un nombre d'étiquettes aussi élevé que nécessaire.

Ainsi, dans le cas d'un code en base 10, il suffit, dans une configuration minimale de 12 interrogations - D, dix tests (0) à (9), et A - de sorte que les interrogations peuvent être codées sur quatre bits seulement.

La réponse des étiquettes présente l'avantage de ne nécessiter qu'un seul bit.

Par rapport aux systèmes connus, l'invention a l'avantage de ne pas nécessiter de détection et gestion des collisions de réponses, ce qui simplifie les contraintes de transmission, réduit la durée des réponses et permet de simplifier leur analyse: il n'est ainsi pas nécessaire de procéder à l'analyse de CRC ou autre dans la station.

La station et les étiquettes présentent donc des circuits logiques d'une grande simplicité, et d'une plus grande robustesse.

Par rapport à des systèmes connus impliquant des périodes aléatoires entre les réponses, et pour lesquels l'augmentation du nombre d'étiquettes peut conduire à une augmentation exponentielle de la durée totale d'interrogation, l'invention présente l'avantage que la durée totale d'analyse est toujours sensiblement proportionnelle au nombre d'étiquettes.

On décrit maintenant d'autres modes de réalisation qui permettent encore d'améliorer la durée d'interrogation totale.

Dans un mode de réalisation de l'invention, on ajoute aux interrogations précitées - (D), tests (0) à (9), et A - des interrogations de blocage (B) et de mise à zéro (Z) ayant les effets suivants.

(B) fait passer en état de blocage une étiquette qui est en état de réponse; autrement dit, (B) met **blocage** à 1 si **reco** vaut 1.

(Z) met à zéro l'index des étiquettes, et remet reco à 1; ceci fait passer en état de réponse les étiquettes qui étaient en état de blocage temporaire; en outre, les étiquettes non bloquées répondent alors par un BIP.

Dans ce cas, on comprend que l'instruction (Z) permet en une seule interrogation de rechercher s'il existe encore des étiquettes non bloquées. Ceci évite, par rapport au premier mode de réalisation, qu'il soit nécessaire de procéder à dix interrogations (pour un code en base dix) afin de s'assurer de l'absence d'étiquettes non bloquées.

L'instruction (B) permet de simplifier la logique des étiquettes, et est émise en fin d'interrogation d'une étiquette, lorsqu'une étiquette a été reconnue. De fait, la présence de (B) simplifie la réponse de l'étiquette à l'instruction (A), qui n'a plus pour effet que de faire avancer l'**index**.

L'instruction (B) permet aussi d'utiliser des codes dont le nombre de chiffres utiles est choisi par l'utilisateur selon l'application envisagée, dans l'exemple 64 au maximum; en l'absence de (B), cette longueur devrait être fixée "en dur" dans la logique de l'étiquette et ne pourrait plus être modifiée.

Enfin, la présence des instructions (B) et (Z) permet d'interrompre une séquence de recherche, pour revenir au départ, en cas de problème de transmission par exemple, ou de parasitage détecté par la station.

Il est aussi possible de prévoir, le cas échéant et comme indiqué plus haut, que D peut débloquer les étiquettes, i.e. faire passer **blocage** à 0. Ceci présente l'avantage de pouvoir interroger les étiquettes à plusieurs reprises, si cela s'avère nécessaire. Inversement, il peut être intéressant pour certaines applications que les étiquettes ayant déjà été interrogées ne puissent plus être interrogées dans cette phase de lecture.

Dans un autre mode de réalisation de l'invention, on limite le nombre d'interrogations, en s'assurant que lors de l'identification d'une étiquette, la station n'émet pas de nouveau les interrogations pour lesquelles elle n'a reçu aucune réponse des étiquettes lors de l'identification des étiquettes précédentes.

A titre d'exemple, le tableau de l'annexe 2 donne un exemple de succession des interrogations et des réponses, dans ce mode de réalisation, pour la même situation que le tableau de l'annexe 1, en utilisant les instructions (B) et (Z).

Dans le tableau de l'annexe 2, lors de l'identification de la première étiquette il est nécessaire de tester, à chaque niveau (index = 0, puis index = 1, puis index = 2), tous les chiffres possibles à partir de 0.

Pour les étiquettes suivantes on peut éviter certaines interrogations pour lesquelles la station n'a reçu aucune réponse.

Ainsi, après identification et blocage de la puce 123 on sait que les configurations suivantes sont vides:

```
0 x x    pas de réponse à l'interrogation n° 3
1 0 x    pas de réponse à l'interrogation n° 6
1 1 x    pas de réponse à l'interrogation n° 7
1 2 0    pas de réponse à l'interrogation n° 10
1 2 1    pas de réponse à l'interrogation n° 11
1 2 2    pas de réponse à l'interrogation n° 12
```

Pour le test des étiquettes restantes on commencera donc par le test (1), pour les codes 1 x x (n° 17), et non pas par le test (0), car on sait qu'il n'existe pas d'étiquettes de code 0 x x.

Ce test étant positif (puce 125), on passera directement au test (2) pour les codes 1 2 x (n° 19), en sautant les tests (0) et (1), car on sait qu'il n'existe pas d'étiquettes de code 1 0 x et 1 1 x.

Ce test étant également positif, on sautera directement au test (3) pour le code 1 2 3 (n° 21), en sautant les tests (0), (1), et (2) car on sait qu'il n'existe pas d'étiquettes de code 1 2 0, 1 2 1, et 1 2 2.

Autrement dit, dans le tableau de l'annexe 2, ce mode de réalisation permet de sauter les interrogations n° 14, 17, 18, 21, 22, 23 et 28 du tableau de l'annexe **1**, l'interrogation (Z) remplaçant les interrogations finales 40 à 49.

On constate que dans cet exemple, l'utilisation des instructions (B) et (Z), et le fait pour la station de ne pas émettre de nouveau les interrogations pour lesquelles elle n'a reçu aucune réponse des étiquettes lors de l'identification des étiquettes précédentes, permet de diminuer de 16 le nombre d'interrogations.

En terme d'arbre, ceci permet d'éviter de parcourir les branches de l'arbre dont on sait qu'elles sont vides, du fait de l'absence de réponse lors d'une interrogation précédente.

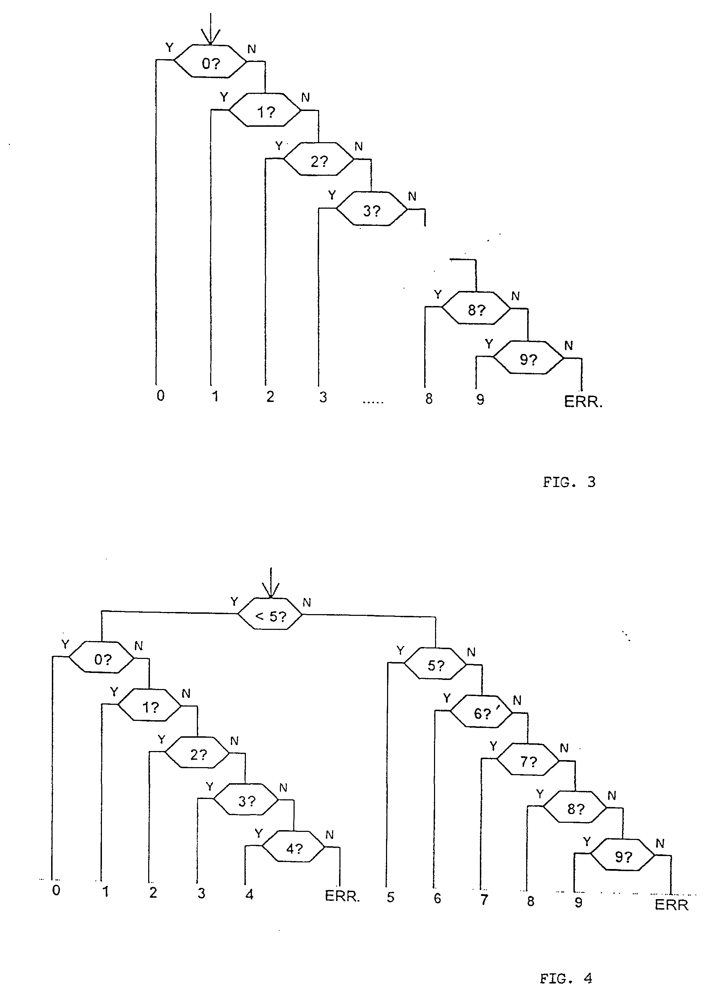

La figure 3 montre un ordinogramme des tests à un rang donné, selon un mode de réalisation de l'invention. L'ordinogramme de la figure 3 correspond au mode de réalisation décrit plus haut, dans lequel pour déterminer s'il existe des étiquettes présentant un des chiffres possibles à un rang de leur code, la station émet vers les étiquettes des interrogations successives de test de la présence d'un chiffre à ce rang du code.

Plus précisément, dans l'exemple de la figure 3, les chiffres du code sont en base 10 et la station émet successivement des interrogations (0), (1), ... (9) pour demander si le chiffre du code de l'étiquette dont le rang est **index** est un "0", un "1", ... un "9".

Ceci conduit aux résultats suivants

| Chiffre | 0 | 1 | 2 | 3 | 4 | 5 | 6 | 7 | 8 | 9 | Total |
|---|---|---|---|---|---|---|---|---|---|---|---|
| Nb.d'interrog. | 1 | 2 | 3 | 4 | 5 | 6 | 7 | 8 | 9 | 10 | **55** |
| Moyenne | 5,5 interrogations par chiffre | | | | | | | | | | |

La description en référence aux figures 4 à 9 indique comment on peut selon l'invention diminuer encore le nombre d'interrogations.

La figure 4 montre un ordinogramme des tests à un rang donné, selon un autre mode de réalisation de l'invention. Dans ce mode de réalisation, à un rang donné, pour déterminer s'il existe des étiquettes présentant un des chiffres possibles à ce rang de leur code, on met en oeuvre les étapes suivantes:

- une étape consistant à déterminer s'il existe des étiquettes présentant à ce rang de leur code un chiffre compris dans un ensemble de chiffres;
- s'il en existe, une étape consistant à déterminer s'il existe des étiquettes présentant un des chiffres dudit ensemble à ce rang de leur code; et
- s'il n'en existe pas, une étape consistant à déterminer s'il existe des étiquettes présentant un des chiffres de l'ensemble complémentaire dudit ensemble à ce rang de leur code.

Autrement dit, pour accélérer la reconnaissance on procède à un premier test en séparant les étiquettes en deux groupes, puis on ne fait les tests que sur un groupe. Bien évidemment, ceci n'a d'intérêt que dans une base assez élevée.

A titre d'exemple, on peut procéder en base 10, à un test "médian" qui consiste à comparer le chiffre lu avec la valeur 5. Si le chiffre est inférieur à 5 la puce répond par un BIP et le processeur testera alors les valeurs depuis 0 jusqu'à 4. Dans le cas contraire le test se fera de 5 à 9.

Les résultats sont alors les suivants:

| Chiffre | 0 | 1 | 2 | 3 | 4 | 5 | 6 | 7 | 8 | 9 | Total |
|---|---|---|---|---|---|---|---|---|---|---|---|
| Nb.d'interrog. | 2 | 3 | 4 | 5 | 6 | 2 | 3 | 4 | 5 | 6 | **40** |
| Moyenne | 4 interrogations par chiffre à reconnaître. | | | | | | | | | | |

Pour mettre en oeuvre ce procédé, il faut les instructions d'interrogation suivantes :

(*M*)        Avance au rang suivant puis test si chiffre < 5
(*0*) (*1*) (*2*) (*3*) (*4*) (*5*) (*6*) (*7*) (*8*) (*9*)Dix instructions de test de la valeur du chiffre

L'interrogation (M) peut remplacer l'instruction (A) décrite plus haut. Dans le cas de la base 10, on peut encore coder toutes les interrogations sur quatre bits.

Il n'est pas nécessaire que l'ensemble soit constitué de nombres consécutifs; il est évidemment intéressant que l'ensemble et son complémentaire aient un même cardinal, si la répartition des codes des étiquettes est uniforme.

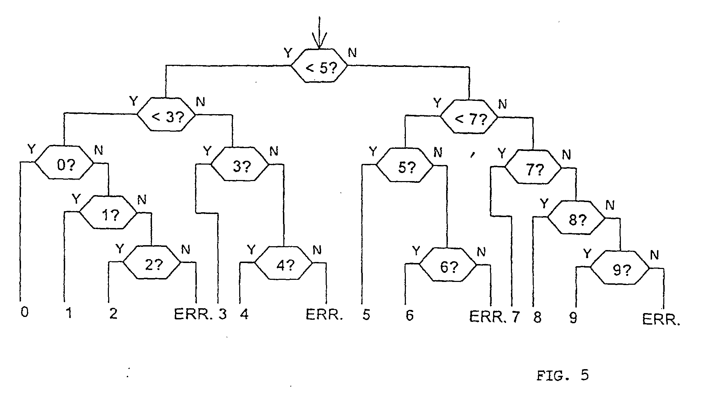

La figure 5 montre un ordinogramme des tests à un rang donné, selon un encore autre mode de réalisation de l'invention; dans ce mode de réalisation, à un rang donné, pour déterminer s'il existe des étiquettes présentant un des chiffres possibles à ce rang de leur code, on met en oeuvre:

- au moins deux étapes consistant à déterminer s'il existe des étiquettes présentant à un rang de leur code un chiffre compris dans un ensemble de chiffres, l'ensemble dans une étape présentant un cardinal inférieur à l'ensemble dans l'étape précédente;
- une étape consistant à déterminer s'il existe des étiquettes présentant un des chiffres de l'ensemble correspondant à la dernière desdites deux étapes.

Autrement dit, on procède selon une méthode dichotomique à une séparation des étiquettes, et on n'effectue des tests que sur un nombre plus réduit d'étiquettes.

Dans le cas d'une base 10, on peut mettre en oeuvre une méthode dichotomique à deux étapes; à la première étape, on vérifie s'il existe des étiquettes dont le chiffre du code au rang en cours est dans l'ensemble {0, 1, 2, 3, 4}.

A la deuxième étape, si la réponse est positive, on vérifie s'il existe des étiquettes dont le chiffre du code est compris dans l'ensemble {0, 1, 2}.

Si la réponse à la deuxième étape est positive, on détermine s'il existe des étiquettes présentant un des chiffres de l'ensemble {0, 1, 2}, autrement dit on effectue les tests (0), (1) et (2). Si la réponse à la deuxième étape est négative, on détermine s'il existe des étiquettes présentant un des chiffres de l'ensemble {3, 4}, autrement dit on effectue les tests (3) et (4).

A la deuxième étape, si la réponse est négative, on vérifie s'il existe des étiquettes dont le chiffre du code est compris dans l'ensemble {5, 6}.

Si la réponse à la deuxième étape est positive, on détermine s'il existe des étiquettes présentant un des chiffres de l'ensemble {5, 6}, autrement dit on effectue les tests (5) et (6). Si la réponse à la deuxième étape est négative, on détermine s'il existe des étiquettes présentant un des chiffres de l'ensemble {7, 8, 9}, autrement dit on effectue les tests (7), (8) et (9).

Bien entendu, pour effectuer les tests (0), (1) et (2); ou (3) et (4); ou (5) et (6); ou (7), (8) et (9), on procède comme expliqué en référence à la figure 3 ou à la figure 7.

Par rapport au mode de réalisation de la figure 4, deux comparaisons supplémentaires sont nécessaires, l'une avec la valeur 3 et l'autre avec la valeur 7, comme indiqué ci-après. Cette méthode, plus complexe, est statistiquement plus rapide que celle des figures 3 et 4, et conduit aux résultats suivants:

| Chiffre | 0 | 1 | 2 | 3 | 4 | 5 | 6 | 7 | 8 | 9 | Total |
|---|---|---|---|---|---|---|---|---|---|---|---|
| Nb.d'interrog. | 3 | 4 | 5 | 3 | 4 | 3 | 4 | 3 | 4 | 5 | **38** |
| Moyenne | 3,8 interrogations par chiffre | | | | | | | | | | |

Pour mettre en oeuvre ce mode de réalisation, on utilise les instructions suivantes:

| (**M**) | Avance au rang suivant puis test si chiffre < 5 |
|---|---|
| (**T**) | Test si chiffre < 3 (mnémonique "T" comme Trois) |
| (**S**) | Test si chiffre < 7 (mnémonique "S" comme Sept) |
| (*0*) (*1*) (*2*) (*3*) (*4*) (*5*) (*6*) (*7*) (*8*) (*9*)Dix instructions de test de la valeur du chiffre | |

On peut dans le cas d'une base 10 choisir d'autres ensembles. On peut aussi, notamment dans le cas d'une base plus élevée, poursuivre plus loin l'interrogation dichotomique, en prévoyant plus de deux étapes.

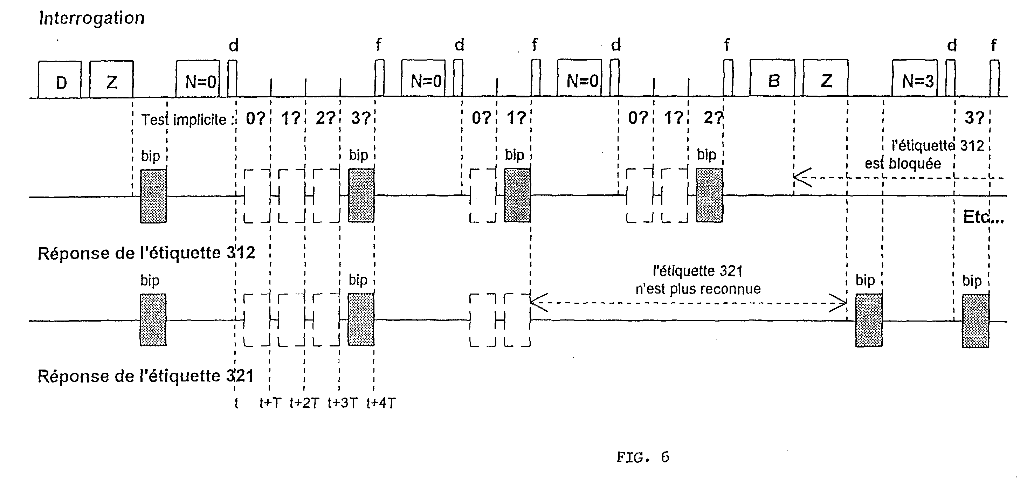

La figure 6 montre un chronogramme d'une séquence d'identification dans un autre mode de réalisation de l'invention. Dans ce mode de réalisation, pour déterminer s'il existe des étiquettes présentant un des chiffres possibles à un rang de leur code, la station émet vers les étiquettes une interrogation, et chacune des étiquettes émet une réponse dans une fenêtre temporelle fonction du chiffre que son code comporte à ce rang.

En somme, dans le cas de la base 10, au lieu de poser successivement les questions : (***N***) ? (***N + 1***) ? (***N + 2***) ? (***N + 3***) ? ...., on se limite à poser la première question (***N***) ? et l'on attend une réponse positive dans un intervalle de temps dont la position temporelle dépendra de la valeur du code de l'étiquette en cours d'identification.

En prenant comme temps t = 0 l'envoi d'un signal bref (***d*** " début ") à la suite de l'instruction (***N***), la réponse d'une étiquette se situera comme suit

| de t = 0 | à t = T | si code = N |
|---|---|---|
| de t = T | à t = 2.T | si code = N + 1 |
| de t = 2.T | à t = 3.T | si code = N + 2 |
| de t = 3.T | à t = 4.T | si code = N + 3 etc... |

T étant la durée normale de transmission d'un " BIP " de réponse.

Avantageusement, dans le cas d'une alimentation à distance des étiquettes, on procède par comptage des périodes de la tension de télé-alimentation pour définir avec précision les intervalles T successifs.

L'invention propose, dans un mode de réalisation, de passer au rang suivant, dès que la station a reçu au moins une réponse, sans attendre d'autres réponses. Dès que l'une des étiquettes situées dans l'inducteur a répondu, le processeur de lecture dans la station convertit le temps de réponse en valeur 0 à 9 et envoie un signal (***f*** " fin ") pour indiquer à l'ensemble des étiquettes que la reconnaissance d'un chiffre vient d'être effectuée et qu'il faut passer au niveau suivant en incrémentant l'adresse (***index*** + 1).

Les étiquettes qui n'ont pas envoyé de réponse ne sont plus reconnues (elles mettent à zéro leur variable ***reco***).

Comme dans les modes de réalisation précédents:

- Une étiquette ne peut émettre un BIP que si elle n'est pas bloquée et que si elle a répondu positivement pour tous les chiffres du début du code.
- Une étiquette complètement reconnue reçoit une instruction de blocage (***B***).

Le schéma de la figure 6 montre un exemple d'interrogation de code en base 10 sur trois chiffres, pour deux étiquettes avec les codes 312 et 321.

L'identification de la première étiquette se fait avec des tests commençant par l'instruction "***N = 0***".

Comme expliqué plus haut, il est possible que lors de l'identification d'une étiquette, la station n'émette pas de nouveau les interrogations pour lesquelles elle n'a reçu aucune réponse des étiquettes lors de l'identification des étiquettes précédentes. Ainsi, après l'identification de l'étiquette 312, on peut utiliser directement l'instruction " ***N = 3*** " pour le test du premier chiffre des étiquettes restantes puisque l'on sait qu'aucun code ne commence par 0, 1 ou 2. En effet, aucune réponse n'a été reçue dans les fenêtres temporelles 0, 1 et 2 lors de l'interrogation "***N = 0*** " au cours de l'identification de l'étiquette 312.

Avec cette méthode de lecture par "test en série implicite", on gagne en moyenne, pour chaque chiffre du code, 5 fois le temps de transmission d'une instruction de test explicite telle que (***0***) à (***9***) ou (***A***). La vitesse d'identification peut ainsi être multipliée dans un rapport voisin de 2, par rapport au mode de réalisation du tableau de l'annexe 2.

Le tableau de l'annexe 3 montre un exemple de succession des interrogations et des réponses dans un autre mode de réalisation de l'invention. Dans ce mode de réalisation de l'invention, pour déterminer s'il existe des étiquettes présentant un des chiffres possibles à un rang de leur code, on met en oeuvre les étapes suivantes:

- une étape consistant à déterminer s'il existe des étiquettes présentant à un rang de leur code un chiffre compris dans un ensemble de chiffres;

- s'il en existe, une étape consistant à déterminer s'il existe des étiquettes présentant un des chiffres dudit ensemble à ce rang de leur code; et

- s'il n'en existe pas, une étape consistant à déterminer s'il existe des étiquettes présentant un des chiffres de l'ensemble complémentaire dudit ensemble à ce rang de leur code.

Pour ces deux dernières étapes, on effectue des tests du type de ceux décrits en référence à la figure 6. Autrement dit, le mode de réalisation de l'annexe 3 est au mode de réalisation de la figure 6 ce que le mode de réalisation de la figure 4 est au mode de réalisation de la figure 3.

A titre d'exemple, dans le cas de la base 10, on effectue un test médian systématique pour déterminer s'il existe des étiquettes dont le chiffre de rang en cours est dans l'ensemble {0, 1, 2, 3, 4}, à l'aide d'une interrogation (M). Selon la réponse à ce test *M* " Code < 5 ? ", l'instruction qui suivra sera " *N = 0 "* (si le test est positif) ou bien "*N = 5* " (dans le cas contraire).

Dans le tableau de l'annexe 3, les intervalles de temps du test implicite du type de celui de la figure 6 sont symbolisés par " _ _ _ ", numérotés à partir de 0. Par exemple l'instruction " **5** _ _ _ " correspond à une réponse sur un code = 7. Le tableau de la figure 3 correspond à la recherche de trois étiquettes de code 123, 652 et 891.

Le tableau de l'annexe 4 montre un exemple de succession des interrogations et des réponses dans encore un autre mode de réalisation de l'invention. Dans ce mode de réalisation, on utilise le principe d'une méthode dichotomique, comme expliqué en référence à la figure 5, ainsi que le principe d'une réponse implicite, comme expliqué en référence à la figure 6.

On utilise le test *M* " Code < 5 ? " suivi des tests *T* " Code < 3 ? " ou bien *S* " Code < 7 ? " selon la réponse obtenue.

Selon les cas, sera envoyé ensuite l'une des quatre instructions de test implicite " *N = 0* ", " *N = 3* ", " *N = 5* " ou" *N = 7* "

Les conventions de notation dans le tableau de l'annexe 4 sont les mêmes que dans le tableau de l'annexe 3.

L'intérêt de ce mode de réalisation dépend de la base, et est d'autant plus important que la base est élevée.

On décrit maintenant encore un autre mode de réalisation de l'invention, qui peut être combiné ou non avec les modes de réalisation décrits précédemment.

Dans ce mode de réalisation, dès qu'une étiquette est reconnue, on la bloque. On recommence ensuite l'étape consistant à déterminer s'il existe des étiquettes présentant un des chiffres possibles, pour le dernier rang du code. Ceci permet d'identifier les autres étiquettes dont le code ne diffère que sur le dernier chiffre, sans avoir besoin de reconnaître de nouveau les premiers chiffres identiques. En termes d'arbres, ceci évite de devoir remonter à la racine de l'arbre à chaque interrogation.

A titre d'exemple, toujours en base 10, si on a des étiquettes de code 12341, 12342, 12343, et 12811, on peut après avoir identifié et bloqué l'étiquette de code 12341, chercher de nouveau s'il existe des étiquettes de code 1234x, pour trouver l'étiquette 12342.

On la bloque, et on cherche de nouveau s'il existe encore des étiquettes de code 1234x, pour trouver maintenant l'étiquette 12343.

On évite ainsi de refaire deux fois les étapes de reconnaissance des quatre premiers chiffres 1234 du code.

Après avoir bloqué l'étiquette 12343, on détermine qu'il n'existe plus des étiquettes 1234x présentant un des chiffres possibles, pour le dernier rang du code.

On passe alors de nouveau au rang 0, pour l'identification de l'étiquette 12811.

On peut avantageusement prévoir les étapes consistant à:

- repasser au rang précédent, et débloquer celles des étiquettes qui ont été bloquées temporairement au rang précédent;

- déterminer s'il existe des étiquettes présentant un des chiffres possibles à ce rang de leur code;

Si c'est le cas, on repart en avant, et sinon, on peut de nouveau repasser au rang précédent.

A titre d'exemple, pour des étiquettes de code 54812, 54831, et 54111: après avoir identifié l'étiquette 54812, on la bloque, et on décrémente l'index jusqu'à ce qu'on retrouve une valeur de cet index pour laquelle une ou plusieurs étiquettes avaient été bloquées temporairement.

Elles sont alors débloquées (*reco =* 1), et on reprend le processus d'identification à partir de cette position.

Ainsi, dans l'exemple, pour *index* = 3, on trouve l'étiquette 54831 qui sera identifiée en cherchant les étiquettes 548xx. Après identification, elle sera bloquée définitivement .

Il faudra alors reculer l'*index* jusqu'à 2 pour retrouver l'étiquette 54111, qui sera identifiée à son tour en commençant le test en 54xxx.

Ce mode de réalisation est particulièrement avantageux dans le cas où le code comporte deux parties:

- un "préfixe" qui est le même pour des articles identiques (par exemple les treize chiffres utilisés pour les codes-barres classique)
- un "suffixe" qui est incrémenté lors de la fabrication des articles, de façon à ce que deux articles ne risquent pas d'avoir des codes identiques (minimum 3 chiffres).

Lorsque les étiquettes à puce sont utilisées en sortie de production d'un article, on se trouvera donc en présence de codes qui ne différeront que par leurs derniers chiffres.

Selon un mode de réalisation avantageux, le nombre de retour en arrière, i.e. le nombre d'itérations successives de l'ensemble des étapes ci-dessus est limité, et, lorsque ce nombre limité est atteint, on met en oeuvre une étape consistant à débloquer les étiquettes bloquées temporairement, et à repasser au premier rang.

Ceci permet de ne pas perdre du temps lorsque l'on passe à l'analyse d'un code de préfixe différent. Par exemple si l'on est repassé six fois au rang précédent, sans recevoir de réponse, il est probable que les étiquettes restantes ont des préfixes différents ou bien qu'il n'y ait plus d'étiquettes à lire.

Il suffit alors de recommencer une procédure classique depuis le premier chiffre du code.

On décrit maintenant à titre d'exemple la mise en oeuvre de ce mode de réalisation.

Dans la logique des puces on prévoit une mémoire de l'adresse à partir de laquelle l'étiquette n'a plus été reconnue lors du processus d'identification en cours, notée *adr_non_reco*.

Cette mémoire d'adresse doit être mise à zéro à chaque début de lecture signalé par l'instruction (*Z*).

Supposons, par exemple, que 3 étiquettes soient en cours de lecture avec les codes suivants:

| Adresse: | 0 | 1 | 2 | 3 | 4 | 5 |
|---|---|---|---|---|---|---|
| Etiquette n° 1: | 5 | 3 | 4 | 0 | 1 | 5 |
| Etiquette n° 2: | 5 | 3 | 4 | 0 | 1 | 7 |
| Etiquette n° 3: | 5 | 3 | 4 | 6 | 2 | 4 |

L'étiquette 534015 dont le numéro est le plus petit sera reconnue la première, puis bloquée par l'instruction (*B*). A ce moment l'étiquette 534017 a en mémoire une adresse de non reconnaissance = 5 qui correspond au rang du premier chiffre non reconnu.

Pour l'étiquette 534624 cette adresse = 3, car seuls les trois premiers chiffres sont identiques à ceux de l'étiquette 543015.

A la suite du blocage de l'étiquette reconnue 543015, on envoie l'instruction de recul (*R*). Dans toutes les étiquettes non bloquées l'adresse est décrémentée, en passant de 6 à 5. Toute étiquette dont l'adresse de non reconnaissance est supérieure ou égale à la nouvelle valeur de l'adresse courante doit répondre par un "BIP " ce qui sera le cas de l'étiquette 534017. On sait alors qu'il existe une étiquette de code 54301x.

La prospection en avant peut alors être reprise pour analyser le ou les chiffres de la fin du code, sans avoir à recommencer l'analyse des premiers chiffres du code. d'où un gain de temps très important, en particulier sur des codes longs.

Lorsque l'étiquette 534017 aura été reconnue et bloquée, la dernière étiquette (534624) aura en mémoire une adresse de non-reconnaissance = 3 et il faudra envoyer 3 instructions de recul (*R*) pour qu'elle réponde et soit identifiée à son tour.

Il est intéressant de limiter le nombre de reculs, qui dans l'exemple est limité à 3. Si ce nombre maximal est atteint, on recommence une procédure classique depuis le premier chiffre en envoyant l'instruction (*Z*).

On peut utiliser l'instruction de recul avec les différentes méthodes précédemment décrites (test en série de la figure 3, test médian de la figure 4, test dichotomique de la figure 5 ou test implicite de la figure 6 et des annexes 3 et 4).

Le tableau de l'annexe 5 montre, avec ce principe, la procédure complète de lecture des trois étiquettes prises en exemple, dans le cas d'un test en série implicite.

Les intervalles de temps du test implicite sont de nouveau symbolisés par "_ _ -", numérotés à partir de 0. Par exemple l'instruction " **5** _ _ _ " correspond à une réponse sur un code = 7. A la fin du test implicite, l'index avance d'une unité, comme signalé dans le tableau de l'annexe 5 par la phrase "(puis avance index)".

Dans un autre mode de réalisation de l'invention, l'interrogation des étiquettes commence à un rang du code autre que le premier. Ceci permet d'ignorer les premiers chiffres du code, ce qui peut être utile dans certaines applications. Ainsi, si un rang donné du code présente dans une application une signification particulière, il est possible de lire directement ce rang, sans devoir nécessairement partir du premier rang du code des étiquettes. Ceci, dans les exemples donnés plus haut est particulièrement facile, puisqu'il suffit d'émettre autant d'instructions (A) que nécessaire. De nouveau, en termes d'arbre, ceci correspond à éviter toute recherche entre la racine de l'arbre et un point donné.

Dans un autre mode de réalisation, l'interrogation des étiquettes comprend une étape d'écriture dans le code des étiquettes. Ceci permet par exemple de marquer les étiquettes qui ont subi un traitement donné, etc.

Dans ce cas, il est aussi particulièrement intéressant de pouvoir commencer l'écriture dans le code des étiquettes à un rang donné.

On décrit un mode de réalisation préféré, avec des instructions ou interrogations de la station qui peuvent s'ajouter à celles mentionnées en référence à l'annexe 1 ou à l'annexe 2. De préférence, et afin de permettre une sélection préalable, les opérations de lecture partielle et d'écriture du code ne sont autorisées que sur des étiquettes qui viennent d'être identifiées (reco = 1) et qui ne sont pas encore bloquées (blocage = 0).

Toutefois cette identification peut être partielle: par exemple, si l'on sait qu'il n'y a qu'une seule étiquette dans le volume de l'inducteur il suffit d'envoyer les instructions (D) et (Z) pour la mettre dans l'état voulu. On peut aussi écrire simultanément dans toutes les étiquettes dont le code commence par un préfixe donné en limitant le processus de reconnaissance préalable à la longueur de ce préfixe.

On peut également vérifier que tout un lot d'étiquettes a le même contenu inscrit dans un champ particulier du code. Par exemple, on peut inscrire le chiffre 1 à l'adresse 50 du code lorsque l'article porteur de l'étiquette a été payé et le chiffre 0 dans le cas contraire. Le processus de lecture qui va être décrit permet de savoir immédiatement si tous les articles présents dans l'inducteur ont bien été payés.

Avant de lancer une opération de lecture ou d'écriture, il est nécessaire de définir la longueur (nombre de chiffres) et l'adresse de début du champ concerné.

On peut utiliser pour ce faire:

- une instruction (N) suivie de q chiffres pour déclarer le nombre de chiffres à lire ou écrire; dans le cas d'une mémoire de 64 chiffres, on utilisera q = 2 chiffres, et l'instruction sera de N01 à N64;
- une instruction (X) suivie de r chiffres pour déclarer l'adresse du premier chiffre à lire ou à écrire; dans le cas d'une mémoire de 64 chiffres, on utilisera r = 2 chiffres, et l'instruction sera de X00 à X63.

Les nombres q et r dépendent bien entendu de la taille de la mémoire, ou de l'application envisagée; ils peuvent aussi dépendre de la base dans laquelle les chiffres sont stockés.

Dans le cas d'une lecture partielle d'une ou plusieurs étiquettes, on peut ensuite utiliser une instruction (L) de lecture partielle du code d'une étiquette reconnue, qui fait suite aux instructions (N) et (X).

Cette instruction est suivie d'un signal bref servant de repère temporel. L'étiquette lue transmet alors en série les bits représentatifs des chiffres successifs, par exemple en traduisant un état 1 par un "BIP" et un état 0 par un silence de même durée. Toutefois, il ne s'agit là que d'un mode de transmission possible.

L'utilisation de la fréquence de téléalimentation comme horloge permet d'éviter toute incertitude sur l'identité du bit transmis.

Pour pouvoir détecter des réponses multiples non identiques (une étiquette non payée dans un lot d'étiquettes ou bien deux étiquettes répondant simultanément alors qu'une seule était normalement concernée) on transmet avantageusement la valeur des chiffres par un code détecteur d'erreur tel que le code Manchester ou le code "2 parmi 5".

Le code Manchester consiste à transmettre un bit à 0 par un silence suivi d'un BIP et un bit à 1 par un BIP suivi d'un silence. Si deux étiquettes ont des réponses différentes, il y aura au moins un bit à 0 transmis en même temps qu'un bit à 1, ce qui se traduira par deux BIP successifs, configuration aisément détectable.

Le code "2 parmi 5" traduit les 10 chiffres 0 à 9 par des mots de 5 bits tels que seulement 2 bits sont à 1, les 3 autres étant à 0, comme indiqué dans le tableau suivant.

Toutes les réponses simultanées et non identiques se traduisent par un code résultant qui présente plus de 2 bits dans l'état. La réception d'un nombre de BIPs supérieur à 2 lors de la transmission d'un chiffre sera donc considéré comme une anomalie.

| Conversion d'un chiffre décimal en code "2 parmi 5" | | | | | |
|---|---|---|---|---|---|
| Chiffre | bit 4 | bit 3 | bit 2 | bit 1 | bit 0 | Code |
| 0 | | | | x | x | 3 |
| 1 | | | x | | x | 5 |
| 2 | | | x | x | | 6 |
| 3 | | x | | | x | 9 |
| 4 | | x | | x | | 10 |
| 5 | | x | x | | | 12 |
| 6 | x | | | | x | 17 |
| 7 | x | | | x | | 18 |
| 8 | x | | x | | | 20 |

(suite)

| Conversion d'un chiffre décimal en code "2 parmi 5" | | | | | | |
|---|---|---|---|---|---|---|
| Chiffre | bit 4 | bit 3 | bit 2 | bit 1 | bit 0 | Code |
| 9 | x | x | | | | 24 |

Dans le tableau ci-dessus, la dernière colonne donne la valeur en base 10 correspondant au code sur 5 bits utilisé.

L'invention permet ainsi une lecture partielle des étiquettes, tout en gérant les problèmes de conflit à l'émission entre les étiquettes. Elle propose de nouveau une solution simple et robuste.

Il est aussi intéressant de pouvoir effectuer une écriture partielle du code. On peut employer pour cela une instruction (E) qui permet d'écrire ou de modifier tout ou partie du code d'une étiquette reconnue, ou même de plusieurs étiquettes.

Cette instruction fait suite aux instructions (N) et (X) mentionnées plus haut. Elle est suivie des valeurs des chiffres à modifier.

Par exemple, toujours en base 10 et pour des étiquettes avec des mémoires de 64 chiffres:

**N05 X10 E31416**

entraîne l'écriture des 5 chiffres "31416" de l'adresse 10 à l'adresse 14.

On peut utiliser d'autres instructions. Si l'on désire par exemple n'écrire ou ne lire qu'un seul chiffre, l'instruction (X) suffit; inversement, on pourrait répéter l'instruction (A), pour ne pas utiliser d'instructions supplémentaires. On pourrait aussi faire suivre l'instruction (N) du premier chiffre à lire ou à écrire, et l'instruction (X) du dernier chiffre à lire ou à écrire; on pourrait aussi faire suivre l'instruction (N) de q+r chiffres représentant respectivement le nombre de chiffres à lire ou à écrire et l'adresse du premier chiffre.

Dans un mode de réalisation de l'invention, les moyens de stockage du code présentent une zone de stockage représentative de la taille d'une partie du code protégée. Dans ce cas, il n'est pas possible d'écrire dans cette partie du code de l'étiquette. A titre d'exemple, dans une étiquette avec mémoire de 64 chiffres, on peut prévoir que les 2 derniers chiffres de cette mémoire contiennent une information représentative de la partie du code qui est protégée.

Dans ce cas, il est avantageux que ladite zone de stockage ne soit susceptible d'être modifiée qu'une seule fois. Par exemple, à la fabrication de l'étiquette, on laisse la zone à une valeur nulle, et on ne permet des modifications de cette zone que tant qu'elle est à la valeur nulle.

On peut alors modifier la zone pour protéger une partie du code, en y inscrivant la taille de la partie du code à protéger, toute modification de la zone devenant impossible dès que sa valeur n'est pas nulle.

A titre d'exemple, on décrit le cas d'une mémoire de 64 mots. La protection agit sur les ($np$) premiers chiffres du code. Ce nombre $np$ est, par exemple, stocké sur les deux derniers mots de la mémoire (aux adresses 62 et 63). A l'origine, ces deux mots sont à zéro et la protection est inexistante.

La protection d'un code consistera donc à écrire ce code, puis à charger le nombre de chiffres à protéger dans les adresses 62 et 63.

Toute modification du code à une adressé inférieure à $np$ sera alors interdite ainsi que toute modification des deux derniers mots de la mémoire.

Autrement dit, l'écriture dans l'E2PROM sera interdite:

- si (index < $np$), ce qui assure une protection des premiers chiffres
- ou si [(index > 61) et ($np$ > 0)] ce qui assure une protection de $np$ s'il est non nul, i.e. empêche toute modification après la première protection.

Le nombre de chiffres de la zone de stockage peut varier en fonction de la nature de la mémoire ou du code, et la position de la zone de stockage peut bien entendu varier aussi.

L'invention permet une protection simple et robuste, facile à mettre en oeuvre. Elle évite la nécessité de mots de passe et autres systèmes habituels.

On décrit maintenant à titre de comparaison diverses séquences de reconnaissance d'étiquettes données à titre d'exemple. On considère notamment un procéde tel que celui décrit dans le document FR-A-2 677 135.

Comme expliqué plus haut, dans de nombreuses applications, on peut utiliser des étiquettes à mémoire morte (ROM) dont le contenu est fixé une fois pour toutes par des impacts de laser sur chacune des puces d'un wafer. Cette opération a avantageusement lieu chez le fondeur qui produit le circuit. Dans ce cas, il est souhaitable de prévoir l'accès à une base de données pour obtenir toutes les caractéristiques utiles de l'article auquel l'étiquette peut avoir été affectée. Les avantages de ces étiquettes, par rapport à des étiquettes EEPROM, résident dans la réduction du coût et l'amélioration de la sensibilité, notamment du fait d'une consommation moindre.

On peut prévoir deux zones dans le code ainsi mémorisé:

- un identifiant de l'application, qui correspond à une application donnée, et s'étend par exemple sur 5 chiffres octaux, ce qui permettrait de spécifier jusqu'à 32768 applications. Cet identifiant permet d'éliminer facilement les étiquettes étrangères, par exemple dans une application "blanchisserie", de rejeter l'identification d'une étiquette "contrôle d'accès" oubliée dans une poche d'un vêtement;
- un identifiant de l'article, automatiquement incrémenté à la fabrication des étiquettes. On peut par exemple prévoir dix chiffres octaux, soit une capacité de $8^{10}$, i.e. supérieure à I milliard.

Dans un lot d'article à identifier, il est donc crédible de retrouver des étiquettes dont les 11 ou 12 premiers chiffres présentent la même séquence, par exemple

32764 000256 1304
32764 000256 2130
32764 000256 6027

Selon l'invention, l'identification d'un tel lot d'articles s'effectue avantageusement de la façon suivante. On utilise dans la suite les tests implicites du type décrit plus haut en référence à la figure 6; pour plus de facilité dans la notation, plutôt que de noter comme dans l'annexe 3, les intervalles de temps du test implicite par " _ _ _ ", on utilise une notation entre parenthèses. Ainsi, 5(3) correspond à l'instruction "**5** _ _ _ ", i.e à une réponse sur un code = 7. On utilise donc dans le cas d'un code octal des instructions 0? à 7?, que l'on symbolise avec un test implicites sous la forme 0(t) à 7(t), t représentant le nombre d'intervalles de temps élémentaires avant la réception de la réponse. Comme plus haut, D est l'instruction d'initialisation, Z(1) l'instruction de test de présence d'étiquettes et B l'instruction de blocage d'une étiquette identifiée.

Dans un tel cas, la première étiquette de code octal 32764 000256 1304 est identifiée par la séquence suivante:

D, Z(1),0(4), 0(3), 0(8), 0(7), 0(5),
0(1), 0(1), 0(1), 0(3), 0(6), 0(7),
0(2), 0(4), 0(1), 0(5), B.

L'identification des 15 chiffres octaux de la première étiquette demande donc en moyenne 18 instructions, et une durée moyenne de 15x(Nmoy + 1) + 1 intervalles élémentaires, Mmoy étant la valeur moyenne du chiffre du code. Avec Nmoy = 3,5, on trouve de l'ordre de 68 intervalles.

Dans un premier mode de mise en oeuvre de l'invention, on évite, pour l'identification des étiquettes suivantes, les interrogations pour lesquelles la station n'a reçu aucune réponse, comme expliqué plus haut en référence au tableau de l'annexe 2. Autrement dit, lors de l'identification d'une étiquette, la station n'émet pas les interrogations correspondant aux fenêtres temporelles dans lesquelles elle n'a pas reçu de réponse des étiquettes lors des étapes d'interrogation des étiquettes précédentes. C'est dire que pour les étiquettes suivantes, au moins pour le début, on suit dans l'arbre des codes le trajet suivi pour la première étiquette. Ceci s'effectue par exemple en utilisant des interrogations successives de test de la présence à un rang des étiquettes du chiffre du rang correspondant du code de l'étiquette identifiée auparavant, tant que les réponses sont les mêmes que lors de l'identification de l'étiquette précédente. Ceci se traduit, en test implicite, par des réponses sur le premier intervalle tant que les réponses sont les mêmes. Dès que les réponses ne sont plus les mêmes, on passe à une interrogation normale, avec des questions 0?.

On pourrait aussi utiliser des interrogations correspondant au code de l'étiquette identifiée auparavant, même sans utiliser le test implicite. Dès que les réponses sont différentes, i.e. dès qu'il n'y a pas de réponse à l'interrogation, on recommence à utiliser des tests normaux, soit les interrogations (0) à (7) en octal, soit des tests médians ou dichotomiques.

Autrement dit, pour revenir à l'exemple, l'identification de la seconde étiquette (32764 000256 2130) s'effectue comme suit:

Z(1), 3(1), 2(1), 7(1), 6(1), 4(1),
0(1), 0(1), 0(1), 2(1), 5(1), 6(1),
1(2), 0(2), 0(4), 0(1), B.

A partir de la réponse à l'interrogation 1? au début de la troisième ligne, on quitte l'arborescence de la première étiquette, après avoir directement reconnu le début 32764 000256 commun des codes.

L'identification de la deuxième étiquette, comme des suivantes, demande en moyenne 17 instructions, et une durée moyenne de 11 + 4x(Nmoy + 1) + 1 intervalles élémentaires, du fait qu'il y a 11 chiffres octaux communs. On trouve une moyenne de 30 intervalles.

Pour identifier (n) étiquettes de même racine, il faut donc

(n x 17) + 1 instructions, et

68 + (n - 1) x 30 = 38 + (n x 30) intervalles

En considérant qu'une interrogation et un intervalle ont la même durée T, on trouve une durée totale de

((n x 47) + 39) x T

Dans un deuxième mode de réalisation, on utilise, comme expliqué plus haut une instruction de recul (R); dans ce cas, l'identification de la deuxième étiquette s'effectue ainsi:

Z(1), R(1), R(1), R(1), R(1)

0(3), 0(2), 0(4), 0(1), B.,

De fait, après avoir identifié la première étiquette, il faut remonter ou reculer de quatre chiffres pour retrouver la racine commune des étiquettes (32764 000256).

A partir de la deuxième étiquette, il faut en moyenne:

10 instructions,

4 x (Nmoy +1) + 5 intervalles, soit 23 intervalles avec Nmoy = 3,5. Pour identifier (n) étiquettes de même racine, il faut donc

(n x 10) + 18 instructions, et

68 + (n x 23) intervalles

En considérant qu'une interrogation et un intervalle ont la même durée T, on trouve une durée totale de

$$((nx33)+86)xT$$

A titre de comparaison le procédé proposé dans le brevet FR-A-2 677 135, qui travaille uniquement en binaire, nécessite pour chaque bit identifié une instruction et un intervalle d'attente de la réponse, soit 2 x T par bits. Pour n étiquettes et une longueur de code binaire correspondant à 15 chiffres octaux, i.e. pour une longueur de code de 45 bits, le temps total nécessaire est de

$$(1 + (45 \times 2)) \times n \times T = n \times 91 \times T.$$

Dès qu'il y a plus de deux étiquettes présentant un même racine - ce qui est hautement probable, comme expliqué plus haut - le procédé de l'invention est préférable. Le tableau suivant montre un comparatif des performance de l'invention et du procédé connu, en fonction du nombre d'étiquettes (2, 5, 10, 30 ou 100, dans les colonnes):

|  | 2 | 5 | 10 | 30 | 100 |
|---|---|---|---|---|---|
| 1er mode | 133 | 274 | 509 | 1449 | 4739 |
| 2eme mode | 152 | 251 | 416 | 1076 | 3386 |
| FR-A-2 677 135 | 182 | 455 | 910 | 2730 | 9100 |
| rapport | 1,2 | 1,8 | 2,2 | 2,5 | 2,7 |

L'invention assure ainsi un gain de plus de 120 % dès qu'il y a plus de dix étiquettes à reconnaître.

Bien entendu, d'autres modes de réalisation de l'invention sont possibles. Le code peut être constitué d'un nombre écrit dans une autre base, et par exemple en base 2, auquel cas le mot "chiffre" dans la description est à remplacer par "bit". Le choix d'une base donnée permet d'optimiser le nombre d'interrogations, et d'utiliser toutes les combinaisons possibles pour un nombre donné de bits du message d'interrogations.

On peut aussi interroger par groupes de chiffres du code; par exemple, en base 2, on pourrait interroger par groupe de trois chiffres binaires du code (8 combinaisons); dans ce cas, on interroge pour les rangs 1 à 3, puis 4 à 6, etc. Ceci revient à interroger en base 8.

La communication entre la station et les étiquettes peut être une communication d'un type autre que ce qui a été décrit: il peut s'agir d'une communication optique, ultrasonore, ou autre, selon l'application et les perturbations existantes.

Les différents mode de réalisation de l'invention - instructions de recul, pas de reprise des questions sans réponse à l'identification de l'étiquette précédente, test implicite, test dichotomique, test médian - peuvent être librement combinées, ou utilisés indépendamment.

Annexe 1.

Exemple avec 3 étiquettes et code à 3 chiffres: **123, 125, 321**

| N° | I | Code testé | Rép. | Commentaires |
|---|---|---|---|---|
| 1 | D | | | Début d'analyse |
| | | | | index = 0 |
| 2 | 0 | 0 x x | | Code[0] = 0 ? |
| 3 | 1 | 1 x x | | Code[0] = 1 ? |
| | | | BIP | Réponse des étiquettes 123 et 125 |
| 4 | A | | | Avance --> index = 1 (reco de l'étiquette 321 = 0) |
| 5 | 0 | 1 0 x | | Code[1] = 0 ? |
| 6 | 1 | 1 1 x | | Code[1] = 1 ? |
| 7 | 2 | 1 2 x | | Code[1] = 2 ? |
| | | | BIP | Réponse des étiquettes 123 et 125 |
| 8 | A | | | Avance --> index = 2 |
| 9 | 0 | 1 2 0 | | Code[2] = 0 ? |
| 10 | 1 | 1 2 1 | | Code[2] = 1 ? |
| 11 | 2 | 1 2 2 | | Code[2] = 2 ? |
| 12 | 3 | 1 2 3 | | Code[2] = 3 ? |
| | | | BIP | Réponse de l'étiquette 123 |
| 13 | A | | | Avance --> index = 0 |
| | | | | reco des étiquettes 125 et 321 = 1 |
| | | | | **BLOCAGE DE L'ETIQUETTE 123** |
| 14 | 0 | 0 x x | | Code[0] = 0? |
| 15 | 1 | 1 x x | | Code[0] = 1 ? |
| | | | BIP | Réponse de l'étiquette 125 |
| 16 | A | | | Avance --> index = 1 (reco de l'étiquette 321 = 0) |
| 17 | 0 | 1 0 x | | Code[1] = 0 ? |
| 18 | 1 | 1 1 x | | Code[1] = 1 ? |
| 19 | 2 | 1 2 x | | Code[1] = 2 ? |
| | | | BIP | Réponse de l'étiquette 125 |
| 20 | A | | | Avance --> index = 2 |
| 21 | 0 | 1 2 0 | | Code[2] = 0 ? |
| 22 | 1 | 1 2 1 | | Code[2] = 1 ? |
| 23 | 2 | 1 2 2 | | Code[2] = 2 ? |
| 24 | 3 | 1 2 3 | | Code[2] = 3 ? (pas de BIP, l'étiquette 123 est bloquée) |
| 25 | 4 | 1 2 4 | | Code[2] = 4 ? |
| 26 | 5 | 1 2 5 | | Code[2] = 5 ? |
| | | | BIP | Réponse de l'étiquette 125 |
| 27 | A | | | Avance --> index = 0 |
| | | | | reco de l'étiquette 321 = 1 |
| | | | | **BLOCAGE DE L'ETIQUETTE 125** |
| 28 | 0 | 0 x x | | Code[0] = 0 ? |
| 29 | 1 | 1 x x | | Code[0] = 1 ? (pas de BIP, étiquettes 123 et 125 bloquées) |

(suite)

| N° | I | Code testé | Rép. | Commentaires |
|---|---|---|---|---|
| 30 | 2 | 2 x x | | Code[0] = 2 ? |
| 31 | 3 | 3 x x | | Code[0] = 3 ? |
| | | | BIP | Réponse de l'étiquette 321 |
| 32 | A | | | Avance --> index = 1 |
| 33 | 0 | 3 0 x | | Code[1] = 0 ? |
| 34 | 1 | 3 1 x | | Code[1] = 1 ? |
| 35 | 2 | 3 2 x | | Code[1] = 2 ? |
| | | | BIP | Réponse de l'étiquette 321 |
| 36 | A | | | Avance --> index = 2 |
| 37 | 0 | 3 2 0 | | Code[2] = 0 ? |
| 38 | 1 | 3 2 1 | | Code[2] = 1 ? |
| | | | BIP | Réponse de l'étiquette 321 |
| 39 | A | | | Avance --> index = 0 |
| | | | | **BLOCAGE DE L'ETIQUETTE 321** |
| 40 | 0 | 0 x x | | Code[0] = 0 ? |
| 41 | 1 | 1 x x | | Code[0] = 1 ? |
| 42 | 2 | 2 x x | | Code[0] = 2 ? |
| 43 | 3 | 3 x x | | Code[0] = 3 ? |
| 44 | 4 | 4 x x | | Code [0] = 4 ? |
| 45 | 5 | 5 x x | | Code[0] = 5 ? |
| 46 | 6 | 6 x x | | Code[0] = 6 ? |
| 47 | 7 | 7 x x | | Code[0] = 7 ? |
| 48 | 8 | 8 x x | | Code[0] = 8 ? |
| 49 | 9 | 9 x x | | Code[0] = 9 ? |
| | | | | Pas de réponse : fin d'interrogation |

Annexe 2.

Exemple avec 3 étiquettes et code à 3 chiffres: **123, 125, 321**

| N° | I | Code testé | Rép. | Commentaires |
|---|---|---|---|---|
| 1 | D | | | Début d'analyse |
| | | | | blocage = 0 |
| 2 | Z | | | Test de présence des étiquettes non bloquées |
| | | | | index = 0 reco = 1 |
| | | | BIP | Réponses des étiquettes 123, 125 et 321 |
| 3 | 0 | 0 x x | | Code[0] = 0 ? |
| 4 | 1 | 1 x x | | Code[0] = 1 ? |
| | | | BIP | Réponse des étiquettes 123 et 125 |
| 5 | A | | | Avance --> index = 1 (reco de l'étiquette 321 = 0) |
| 6 | 0 | 1 0 x | | Code[1] = 0 ? |
| 7 | 1 | 1 1 x | | Code[1] = 1 ? |
| 8 | 2 | 1 2 x | | Code[1] = 2 ? |
| | | | BIP | Réponse des étiquettes 123 et 125 |
| 9 | A | | | Avance --> index = 2 |
| 10 | 0 | 1 2 0 | | Code[2] = 0 ? |
| 11 | 1 | 1 2 1 | | Code[2] = 1 ? |
| 12 | 2 | 1 2 2 | | Code[2] = 2 ? |
| 13 | 3 | 1 2 3 | | Code[2] = 3 ? |

(suite)

| N° | I | Code testé | Rép. | Commentaires |
|----|---|------------|------|--------------|
| | | | BIP | Réponse de l'étiquette 123 |
| 14 | A | | | Avance --> index = 3 (reco de l'étiquette 125 = 0) |
| 15 | B | | | **BLOCAGE DE L'ÉTIQUETTE 123** |
| 16 | Z | | | Test de présence des étiquettes non bloquées |
| | | | | index = 0 reco = 1 |
| | | | BIP | Réponses des étiquettes 125 et 321 |
| 17 | 1 | 1 x x | | Code[0] = 1 ? |
| | | | BIP | Réponse de l'étiquette 125 |
| 18 | A | | | Avance --> index = 1 (reco de l'étiquette 321 = 0) |
| 19 | 2 | 1 2 x | | Code[1] = 2 ? |
| | | | BIP | Réponse de l'étiquette 125 |
| 20 | A | | | Avance --> index = 2 |
| 21 | 3 | 1 2 3 | | Code[2] = 3 ? (pas de BIP, l'étiquette 123 est bloquée) |
| 22 | 4 | 1 2 4 | | Code[2] = 4 ? |
| 23 | 5 | 1 2 5 | | Code[2] = 5 ? |
| | | | BIP | Réponse de l'étiquette 125 |
| 24 | A | | | Avance --> index = 3 |
| 25 | B | | | **BLOCAGE DE L'ÉTIQUETTE 125** |
| 26 | Z | | | Test de présence des étiquettes non bloquées |
| | | | | index = 0 reco = 1 |
| | | | BIP | Réponse de l'étiquette 321 |
| 27 | 1 | 1 x x | | Code[0] = 1 ? (pas de BIP, étiquettes 123 et 125 bloquées) |
| 28 | 2 | 2 x x | | Code[0] = 2 ? |
| 29 | 3 | 3 x x | | Code[0] = 3 ? |
| | | | BIP | Réponse de l'étiquette 321 |
| 30 | A | | | Avance --> index = 1 |
| 31 | 0 | 3 0 x | | Code[1] = 0 ? |
| 32 | 1 | 3 1 x | | Code[1] = 1 ? |
| 33 | 2 | 3 2 x | | Code[1] = 2 ? |
| | | | BIP | Réponse de l'étiquette 321 |
| 34 | A | | | Avance --> index = 2 |
| 35 | 0 | 3 2 0 | | Code[2] = 0 ? |
| 36 | 1 | 3 2 1 | | Code[2] = 1 ? |
| | | | BIP | Réponse de l'étiquette 321 |
| 37 | A | | | Avance --> index = 3 |
| 38 | B | | | **BLOCAGE DE L'ÉTIQUETTE 321** |
| 39 | Z | | | Test de présence des étiquettes non bloquées, |
| | | | | Pas de réponse : Fin d'identification |

Annexe 3

Exemple avec 3 étiquettes à trois chiffres: **123, 652, 891**

| Instructions | Réponse des étiquettes | Chiffre identifié | Commentaires |
|--------------|------------------------|-------------------|--------------|
| **D Z** | 123, 652, 891 | | Début examen, Déblocage des étiquettes |
| | | | Test des étiquettes existantes |
| **M** | 123 | | Index = 0 |
| **0** _ _ | <u>1</u>23 | **1** | Index = 0, réponse sur l'intervalle 1, puis |
| | | | avance index |

(suite)

| Instructions | Réponse des étiquettes | Chiffre identifié | Commentaires |
|---|---|---|---|
| M | 123 | | Index = 1 |
| 0 _ _ _ | 123 | 2 | Index = 1, réponse sur l'intervalle 2, puis avance index |
| M | 123 | | Index = 2 |
| 0 _ _ _ _ | 123 | 3 | Index = 2, réponse sur l'intervalle 3 |
| B | | | **Etiquette 123 reconnue** |
| Z | 652, 891 | | Test de présence des étiquettes non bloquées |
| | | | index = 0 reco = 1 |
| M | | | Index = 0 |
| 5 _ _ | 652 | 6 | Index = 0, réponse sur l'intervalle 6, puis avance index |
| M | | | Index = 1 |
| 5 _ | 652 | 5 | Index = 1, réponse sur l'intervalle 5, puis avance index |
| M | 652 | | Index = 2 |
| 0 _ _ _ | 652 | 2 | Index = 2, réponse sur l'intervalle 2 |
| B | | | **Etiquette 652 reconnue** |
| Z | 891 | | Test de présence des étiquettes non bloquées |
| | | | index = 0 reco = 1 |
| M | | | Index = 0 |
| 5 _ _ _ _ | 891 | 8 | Index= 0, réponse sur l'intervalle 8, puis avance index |
| M | | | Index = 1 |
| 5 _ _ _ _ _ | 891 | 9 | Index = 1, réponse sur l'intervalle 9, puis avance index |
| M | 891 | | Index = 2 |
| 0 _ _ | 891 | 1 | Index = 2, réponse sur l'intervalle 2 |
| B | | | **Etiquette 891 reconnue** |
| Z | | | Test de présence des étiquettes non bloquées |
| | | | index = 0 reco = 1 |
| | | | Pas de réponse, fin |

Annexe 4

Exemple avec 3 étiquettes à trois chiffres: **123, 652, 891**

| Instructions | Réponse des étiquettes | Chiffre identifié | Commentaires |
|---|---|---|---|
| D Z | 123, 652, 891 | | Début examen, Déblocage des étiquettes Test des étiquettes existantes |
| M | 123 | | Index = 0 |
| T | 123 | | Index = 0 |
| 0 _ _ | 123 | 1 | Index = 0, réponse sur l'intervalle 1, puis avance index |
| M | 123 | | Index = 1 |
| T | 123 | | Index = 1 |
| 0 _ _ _ | 123 | 2 | Index = 1, réponse sur l'intervalle 2, puis |

(suite)

| Instructions | Réponse des étiquettes | Chiffre identifié | Commentaires |
|---|---|---|---|
| | | | avance index |
| M | 123 | | Index = 2 |
| T | | | Index = 2 |
| 3 _ | 12<u>3</u> | 3 | Index = 2, réponse sur l'intervalle 3 |
| B | | | **Etiquette 123 reconnue** |
| Z | 652, 891 | | Test de présence des étiquettes non bloquées |
| | | | index = 0 reco = 1 |
| M | | | Index = 0 |
| S | 652 | | Index = 0 |
| 5 _ _ | <u>6</u>52 | 6 | Index = 0, réponse sur l'intervalle 6, puis avance index |
| M | | | Index = 1 |
| S | 652 | | Index = 1 |
| 5 _ | 6<u>5</u>2 | 5 | Index = 1, réponse sur l'intervalle 5, puis avance index |
| M | 652 | | Index = 2 |
| T | 652 | | Index = 2 |
| 0 _ _ _ | 65<u>2</u> | 2 | Index = 2, réponse sur l'intervalle 2 |
| B | | | **Etiquette 652 reconnue** |
| Z | 891 | | Test de présence des étiquettes non bloquées |
| | | | index = 0 reco = 1 |
| M | | | Index = 0 |
| S | | | Index = 0 |
| 7 _ _ | <u>8</u>91 | 8 | Index = 0, réponse sur l'intervalle 8, puis avance index |
| M | | | Index = 1 |
| S | | | Index = 1 |
| 7 _ _ _ | 8<u>9</u>1 | 9 | Index = 1, réponse sur l'intervalle 9, puis avance index |
| M | 891 | | Index = 2 |
| T | 891 | | Index = 2 |
| 0 _ _ | 89<u>1</u> | 1 | Index = 2, réponse sur l'intervalle 2 |
| B | | | **Etiquette 891 reconnue** |
| Z | | | Test de présence des étiquettes non bloquées |
| | | | index = 0 reco = 1 |
| | | | <u>Pas de réponse, fin</u> |

Annexe 5

<u>Exemple avec 3 étiquettes et code à 5 chiffres</u>: **534015, 534017, 53424**

| Instructions | Réponse des étiquettes | Chiffre identifié | Commentaires |
|---|---|---|---|
| **D Z** | 534015, 534017 534624 | | Début examen, Déblocage des étiquettes Test des étiquettes existantes |
| 0 _ _ _ _ _ _ | <u>5</u>34015, <u>5</u>34017 <u>5</u>34624 | 5 | Index = 0, réponse sur l'intervalle 5 (puis avance index) |

**EP 0 777 194 B1**

(suite)

| Instructions | Réponse des étiquettes | Chiffre identifié | Commentaires |
|---|---|---|---|
| 0 _ _ _ _ | 534015, 534017 534624 | 3 | Index = 1, réponse sur l'intervalle 3 |
| 0 _ _ _ _ _ | 534015, 534017 534624 | 4 | Index = 2, réponse sur l'intervalle 4 |
| 0 _ | 534015, 534017 | 0 | Index = 3, réponse sur l'intervalle 0 *adr_non_reco* de l'étiquette 534624 = 3 |
| 0 _ _ | 534015, 534017 | 1 | Index = 4, réponse sur l'intervalle 1 |
| 0 _ _ _ _ _ _ | 534015 | 5 | Index = 5, réponse sur l'intervalle 5 **Etiquette 534015 reconnue** *adr_non_reco* de l'étiquette 534017 = 5 |
| B | | | Blocage de l'étiquette 534015 (index = 6) |
| R | 534017 | | Recul à l'index 5, réponse de l'étiquette 534017 (index <= *adr_non_reco*) |
| 5 _ _ _ | 534017 | 7 | Index = 5, réponse sur l'intervalle 2 **Etiquette 534017 reconnue** |
| B | | | Blocage de l'étiquette 534017 (index = 6) |
| R | | | Recul à l'index 5 |
| R | | | Recul à l'index 4 |
| R | 534624 | | Recul à l'index 3, réponse de l'étiquette 534624 (index <= *adr_non_reco*) |
| 0 _ _ _ _ _ _ _ | 534624 | 6 | Index = 3, réponse sur l'intervalle 6 |
| 0 _ _ _ | 534624 | 2 | Index = 4, réponse sur l'intervalle 2 |
| 0 _ _ _ _ _ | 534624 | 4 | Index = 5, réponse sur l'intervalle 4 **Etiquette 534624 reconnue** |
| B | | | Blocage de l'étiquette 534624 |
| R R R | néant | | 3 reculs sans réponse (recul max) |
| Z | néant | | Toutes les étiquettes sont bloquées, FIN |

**Revendications**

1. Procédé automatique d'identification à distance d'étiquettes électroniques (9) présentant chacune un code propre formé d'une pluralité de chiffres en une pluralité de rangs, à partir d'une station, dans lequel l'identification d'une étiquette comprend les étapes consistant à

   - (a) pour un rang du code, déterminer s'il existe des étiquettes présentant un des chiffres possibles à un rang de leur code;
   - (b) pour ce rang, si ce rang est avant le dernier rang, s'il en existe pour un chiffre donné, stocker ce chiffre, bloquer temporairement les autres étiquettes qui n'ont pas ce chiffre donné à ce rang et repasser à l'étape (a) pour le rang suivant;
   - (c) si ce rang est le dernier rang, s'il en existe pour un chiffre donné, stocker ce chiffre, et reconstituer le code de l'étiquette à l'aide des chiffres stockés.

2. Procédé selon la revendication 1, **caractérisé en ce que** l'étape consistant à déterminer s'il existe des étiquettes présentant un des chiffres possibles à un rang de leur code comprend l'émission de la station vers les étiquettes d'interrogations successives de test de la présence d'un chiffre à ce rang du code.

3. Procédé selon la revendication 1, **caractérisé en ce que** l'étape consistant à déterminer s'il existe des étiquettes présentant un des chiffres possibles à un rang de leur code comprend l'émission de la station vers les étiquettes d'une interrogation, chacune des étiquettes émettant une réponse dans une fenêtre temporelle fonction du chiffre que son code comporte à ce rang.

**4.** Procédé selon la revendication 3, **caractérisé en ce que** l'on met en oeuvre l'étape (b) dès que la station a reçu au moins une réponse, sans attendre d'autres réponses.

**5.** Procédé selon l'une des revendications 1 à 4, **caractérisé en ce que** l'étape consistant à déterminer s'il existe des étiquettes présentant un des chiffres possibles à un rang de leur code comprend:

- une étape consistant à déterminer s'il existe des étiquettes présentant à un rang de leur code un chiffre compris dans un ensemble de chiffres;
- s'il en existe, une étape consistant à déterminer s'il existe des étiquettes présentant un des chiffres dudit ensemble à ce rang de leur code; et
- s'il n'en existe pas, une étape consistant à déterminer s'il existe des étiquettes présentant un des chiffres de l'ensemble complémentaire dudit ensemble à ce rang de leur code.

**6.** Procédé selon la revendication 5, **caractérisé en ce que** ledit ensemble contient la moitié des chiffres possibles.

**7.** Procédé selon la revendication 5 ou 6, **caractérisé en ce que** le code comprend des chiffres en base 10, et **en ce que** l'ensemble de chiffres comprend les chiffres {0, 1, 2, 3, 4} ou {5, 6, 7, 8, 9}.

**8.** Procédé selon l'une des revendications 1 à 4, **caractérisé en ce que** l'étape consistant à déterminer s'il existe des étiquettes présentant un des chiffres possibles à un rang de leur code comprend:

- au moins deux étapes consistant à déterminer s'il existe des étiquettes présentant à un rang de leur code un chiffre compris dans un ensemble de chiffres, l'ensemble dans une étape présentant un cardinal inférieur à l'ensemble dans l'étape précédente;
- une étape consistant à déterminer s'il existe des étiquettes présentant un des chiffres de l'ensemble correspondant à la dernière desdites deux étapes.

**9.** Procédé selon la revendication 8, **caractérisé en ce que** le code comprend des chiffres en base 10, et **en ce qu'**il comprend

- une étape consistant à déterminer s'il existe des étiquettes présentant à un rang de leur code un chiffre compris dans l'ensemble {0, 1, 2, 3, 4};
- si le résultat de cette première étape est positif, une étape consistant à déterminer s'il existe des étiquettes présentant à un rang de leur code un des chiffres des ensembles {0, 1, 2}, {3, 4};
- si le résultat de la première étape est négatif, une étape consistant à déterminer s'il existe des étiquettes présentant un des chiffres des ensembles {5, 6}, {7, 8, 9}.

**10.** Procédé selon l'une des revendications précédentes, **caractérisé en ce qu'**il comprend, pendant ou après l'étape (c),

- une étape (d) consistant à débloquer les étiquettes bloquées temporairement, à bloquer l'étiquette dont le code a été reconstitué et à repasser au premier rang,

le procédé repassant ensuite à l'étape (a) pour l'identification de l'étiquette suivante.

**11.** Procédé selon l'une des revendications 1 à 9, **caractérisé en ce que** l'étape (c) consiste en outre à bloquer l'étiquette dont le code a été reconstitué.

**12.** Procédé selon la revendication 11, **caractérisé en ce que** le procédé comprend ensuite la des étapes (a) et (c) pour identifier les autres étiquettes dont le code ne diffère que sur le dernier chiffre.

**13.** Procédé selon la revendication 11 ou 12, **caractérisé en ce que** le procédé comprend les étapes consistant à

- (e) repasser au rang précédent, et débloquer celles des étiquettes qui ont été bloquées temporairement au rang précédent;
- (f) déterminer s'il existe des étiquettes présentant un des chiffres possibles à ce rang de leur code; et repasser à l'étape (b) si c'est le cas, et si ce n'est pas le cas, repasser à l'étape (e).

14. Procédé selon la revendication 13, **caractérisé en ce que** le nombre d'itérations successives de l'ensemble des étapes (e) et (f) est limité, et **en ce que**, lorsque ce nombre limité est atteint, est mise en oeuvre une étape (g) consistant à débloquer les étiquettes bloquées temporairement, et à repasser au premier rang,
le procédé repassant ensuite à l'étape (a) pour l'identification de l'étiquette suivante.

15. Procédé selon l'une des revendications 2 à 14, **caractérisé en ce que** lors de l'identification d'une étiquette, la station n'émet pas de nouveau les interrogations pour lesquelles elle n'a reçu aucune réponse des étiquettes lors des étapes d'identification des étiquettes précédentes.

16. Procédé selon l'une des revendications 3 à 15, **caractérisé en ce que** lors de l'identification d'une étiquette, la station n'émet pas les interrogations correspondant aux fenêtres temporelles dans lesquelles elle n'a pas reçu de réponse des étiquettes lors des étapes d'interrogation des étiquettes précédentes

17. Procédé selon l'une des revendications 2 à 16, **caractérisé en ce que** lors de l'identification d'une étiquette, la station émet vers les étiquettes des interrogations successives de test de la présence à un rang des étiquettes du chiffre du rang correspondant du code de l'étiquette identifiée auparavant, tant que les réponses des étiquettes sont les mêmes que lors de l'identification de l'étiquette précédente.

18. Procédé selon l'une des revendications précédentes, **caractérisé en ce que** l'interrogation des étiquettes comprend une étape d'écriture dans le code des étiquettes.

19. Procédé selon l'une des revendications précédentes, **caractérisé en ce que** l'interrogation des étiquettes commence à un rang du code autre que le premier.

20. Station d'identification à distance d'étiquettes électroniques (9) présentant chacune un code propre formé d'une pluralité de chiffres en une pluralité de rangs et un index représentatif d'un rang dans ce code, notamment pour la mise en oeuvre du procédé selon l'une des revendications 1 à 19, comprenant des moyens (6, 7) d'émission d'interrogations vers les étiquettes, des moyens de réception (10, 11) des réponses des étiquettes, et des moyens de contrôle (8) contrôlant les interrogations comprenant:

   - une interrogation mettant les étiquettes dans un état de début d'analyse (D);
   - une interrogation d'avance (A) de la position de l'index des étiquettes;
   - au moins une interrogation permettant de déterminer la présence d'un chiffre donné au rang du code des étiquettes correspondant à l'index.

21. Station selon la revendication 20, **caractérisée en ce que** les interrogations comprennent autant d'interrogations (0), ... (9), (N) permettant de déterminer la présence d'un chiffre donné au rang du code des étiquettes correspondant à l'index qu'il existe de chiffres dans la base des chiffres du code des étiquettes.

22. Station selon la revendication 20 ou 21, **caractérisée en ce que** les interrogations comprennent en outre des interrogations permettant de déterminer si un chiffre donné au rang du code des étiquettes correspondant à l'index appartient à un ensemble.

23. Station selon la revendication 20, 21, ou 22, **caractérisée en ce que** les moyens de réception (10, 11) des réponses des étiquettes comprennent des moyens de définition de plages temporelles de réception différentes pour recevoir des réponses correspondant aux valeurs différentes du chiffre des étiquettes.

24. Station selon l'une des revendications 20 à 23, **caractérisée en ce que** les interrogations comprennent une interrogation (B) de blocage des étiquettes.

25. Station selon l'une des revendications 20 à 24, **caractérisée en ce que** les interrogations comprennent une interrogation (Z) de remise à zéro de l'index des étiquettes et de test de présence d'étiquettes non bloquées.

26. Station selon l'une des revendications 20 à 25, **caractérisée en ce que** les interrogations comprennent une interrogation (R) de recul d'un rang de l'index des étiquettes.

27. Station selon l'une des revendications 20 à 26, **caractérisée en ce que** les moyens de contrôle comprennent des moyens de stockage des interrogations permettant de déterminer la présence d'un chiffre donné au rang du code des étiquettes correspondant à l'index pour lesquelles aucune réponse des étiquettes n'est reçue.

28. Etiquette électronique présentant des moyens de communication avec une station, pour recevoir des interrogations de la station et pour émettre des réponses vers la station, des moyens de contrôle et de stockage d'un code formé de chiffres, notamment pour la mise en oeuvre du procédé selon l'une des revendications 1 à 19, ladite étiquette présentant au moins un premier état de blocage, un deuxième état de blocage temporaire, et un troisième état dans lequel elle peut émettre des réponses, ladite étiquette comprenant un index représentatif d'un rang dans son code, les moyens de contrôle permettant de changer l'index sur interrogation de la station et permettant d'émettre sur interrogation de la station un signal indicatif de la présence d'un chiffre donné à un rang du code fonction de l'index.

29. Etiquette électronique selon la revendication 28, **caractérisée en ce que** les moyens de contrôle comprennent des moyens de temporisation des réponses en fonction du chiffre lu à l'adresse définie par l'index. de telle sorte que les plages temporelles d'émission correspondent à des valeurs différentes du chiffre.

30. Etiquette électronique selon la revendication 28 ou 29, **caractérisée en ce qu'**elle comprend une mémoire de stockage d'un rang de son code fonction du rang du premier chiffre non reconnu.

31. Etiquette électronique selon l'une des revendications 28 à 30, **caractérisée en ce que** les moyens de stockage du code présentent une zone de stockage représentative de la taille d'une partie du code protégée.

32. Etiquette électronique selon la revendication 31, **caractérisée en ce que** ladite zone de stockage n'est susceptible d'être modifiée qu'une seule fois.

33. Combinaison d'une station selon l'une des revendications 20 à 27 et d'au moins une étiquette selon l'une des revendications 28 à 32.

## Patentansprüche

1. Automatisches Verfahren zur Fernidentifizierung von elektronischen Etiketten (9), welche jeweils einen eigenen Code besitzen, der aus einer Anzahl von Zeichen an einer Anzahl von Positionen gebildet wird, mittels einer Station, wobei die Identifizierung eines Etiketts die Schritte umfaßt bestehend aus

   - (a) für eine Position des Codes, Bestimmen, ob Etiketten existieren, die eine der möglichen Zeichen an einer Position ihres Codes aufweisen;

   - (b) für diese Position, wenn diese Position vor der letzten Position ist und wenn für ein gegebenes Zeichen ein Etikett existiert, Speichem des Zeichens, zweitweises Blockieren der übrigen Etiketten, die dieses gegebene Zeichen an dieser Position nicht besitzen und Wiederholen des Schritts (a) für die nächste Position;

   - (c) wenn diese Position die letzte Position ist und wenn für ein gegebenes Zeichen ein Etikett existiert, Speichern dieses Zeichens und Wiederherstellen des Codes des Etiketts mittels der gespeicherten Zeichen.

2. Verfahren gemäß Anspruch 1, **dadurch gekennzeichnet, daß** der Schritt des Bestimmens, ob Etiketten existieren, die eines der möglichen Zeichen an einer Position ihres Codes aufweisen, das Aussenden von aufeinanderfolgenden Fragen zum Testen der Gegenwart eines Zeichens an dieser Position des Codes von der Station zu den Etiketten umfaßt.

3. Verfahren gemäß Anspruch 1, **dadurch gekennzeichnet, daß** der Schritt des Bestimmens, ob Etiketten existieren, die eines der möglichen Zeichen an einer Position ihres Codes aufweisen, das Aussenden einer Frage von der Station zu den Etiketten umfaßt, wobei jedes der Etiketten eine Antwort in einem Zeitfenster aussendet, welches von dem Zeichen abhängt, das sein Code an dieser Position besitzt.

4. Verfahren gemäß Anspruch 3, **dadurch gekennzeichnet, daß** der Schritt (b) ausgeführt wird, sobald die Station mindestens eine Antwort erhalten hat, ohne weitere Antworten abzuwarten.

**EP 0 777 194 B1**

**5.** Verfahren gemäß einem der Ansprüche 1 bis 4, **dadurch gekennzeichnet, daß** der Schritt des Bestimmens, ob Etiketten existieren, die eines der möglichen Zeichen an einer Position ihres Codes aufweisen, umfaßt:

- einen Schritt des Bestimmens, ob Etiketten existieren, die an einer Position ihres Codes ein Zeichen aufweisen, welches in einer Gruppe von Zeichen enthalten ist;

- falls ein solches existiert, einen Schritt des Bestimmens, ob Etiketten existieren, die eines der Zeichen dieser Gruppe an dieser Position ihres Codes aufweisen; und

- falls ein solches nicht existiert, einen Schritt des Bestimmens, ob Etiketten existieren, die eines der Zeichen der zu dieser Gruppe komplementären Gruppe an dieser Position ihres Codes aufweisen.

**6.** Verfahren gemäß Anspruch 5, **dadurch gekennzeichnet, daß** die genannte Gruppe die Hälfte aller möglichen Zeichen enthält.

**7.** Verfahren gemäß Anspruch 5 oder 6, **dadurch gekennzeichnet, daß** der Code Zeichen mit Basis 10 umfaßt, und wobei die Gruppe von Zeichen die Zeichen {0, 1, 2, 3, 4} oder {5, 6, 7, 8, 9} umfaßt.

**8.** Verfahren gemäß einem der Ansprüche 1 bis 4, **dadurch gekennzeichnet, daß** der Schritt des Bestimmens, ob Etiketten existieren, die eines der möglichen Zeichen an einer Position ihres Codes besitzen, umfaßt:

- mindestens zwei Schritte des Bestimmens, ob Etiketten existieren, die an einer Position ihres Codes ein in einer Gruppe von Zeichen enthaltenes Zeichen aufweisen, wobei die Gruppe in einem Schritt eine Kardinalzahl aufweist, die kleiner ist als die Gruppe im vorhergehenden Schritt;

- einen Schritt des Bestimmens, ob Etiketten existieren, die eines der Zeichen der Gruppe, die der letzten der genannten zwei Schritte entspricht, aufweist.

**9.** Verfahren gemäß Anspruch 8, **dadurch gekennzeichnet, daß** der Code Zeichen mit Basis 10 umfaßt, und welches umfaßt:

- einen Schritt des Bestimmens, ob Etiketten existieren, die an einer Position ihres Codes ein in der Gruppe {0, 1, 2, 3, 4} enthaltenes Zeichen aufweisen;

- wenn das Ergebnis des ersten Schritts positiv ist, einen Schritt des Bestimmens, ob Etiketten existieren, die an einer Position ihres Codes eines der Zeichen der Gruppen {0, 1, 2}, {3, 4} aufweisen;

- wenn das Ergebnis des ersten Schritts negativ ist, einen Schritt des Bestimmens, ob Etiketten existieren, die eines der Zeichen der Gruppen {5, 6}, {7, 8, 9} aufweisen.

**10.** Verfahren gemäß einem der vorangehenden Ansprüche, **dadurch gekennzeichnet, daß** es während oder nach dem Schritt (c) umfaßt,

- einen Schritt (d) des Freischaltens der zeitweise blockierten Etiketten, des Blockierens des Etiketts, dessen Code wiederhergestellt worden ist, und des Zurückkehrens zur ersten Position,

wobei das Verfahren anschließend zum Schritt (a) zur Identifizierung des nächsten Etiketts zurückkehrt.

**11.** Verfahren gemäß einem der Ansprüche 1 bis 9, **dadurch gekennzeichnet, daß** der Schritt (c) unter anderem aus dem Blockieren des Etiketts besteht, dessen Code wiederhergestellt worden ist.

**12.** Verfahren gemäß Anspruch 11, **dadurch gekennzeichnet, daß** das Verfahren anschließend die Wiederholung der Schritte (a) und (c) zur Identifizierung der übrigen Etiketten umfaßt, deren Code sich nur durch das letzte Zeichen unterscheiden.

**13.** Verfahren gemäß Anspruch 11 oder 12, **dadurch gekennzeichnet, daß** das Verfahren die Schritte umfaßt, bestehend aus

27

- (e) zurückkehren zur vorhergehenden Position und Freischalten solcher Etiketten, die bei der vorhergehenden Position zeitweise blockiert worden waren;

- (f) Bestimmen, ob Etiketten existieren, die eines der möglichen Zeichen an dieser Position ihres Codes besitzen; und Wiederholen des Schritts (b), wenn dies der Fall ist, und Wiederholen des Schritts (e), wenn dies nicht der Fall ist.

14. Verfahren gemäß Anspruch 13, **dadurch gekennzeichnet, daß** die Anzahl aufeinanderfolgender Iterationen der Gruppe von Schritten (e) und (f) begrenzt ist und daß, sobald die Grenzzahl erreicht ist, ein Schritt (g) ausgeführt wird, der aus dem Freischalten der zeitweise blockierten Etiketten und dem Zurückkehren zur ersten Position besteht,
wobei das Verfahren anschließend zum Schritt (a) zur Identifizierung des nächsten Etiketts zurückkehrt.

15. Verfahren gemäß einem der Ansprüche 2 bis 14, **dadurch gekennzeichnet, daß** die Station während der Identifizierung eines Etiketts die Fragen, auf die sie keine Antwort von den Etiketten während der Schritte der Identifizierung der vorhergehenden Etiketten erhalten hat, nicht nochmal aussendet.

16. Verfahren gemäß einem der Ansprüche 3 bis 15, **dadurch gekennzeichnet, daß** die Station während der Identifizierung eines Etiketts die Fragen, die den Zeitfenstern zugehören, in welchen sie keine Antwort von den Etiketten während der Schritte der Befragung der vorhergehenden Etiketten erhalten hat, nicht aussendet.

17. Verfahren gemäß einem der Ansprüche 2 bis 16, **dadurch gekennzeichnet, daß** die Station während der Identifizierung eines Etiketts sukzessive Fragen an die Etiketten aussendet zum Testen der Gegenwart eines Zeichens an einer Position der Etiketten mit Zeichen und Position entsprechend dem Code des zuvor identifizierten Etiketts, solange die Antworten der Etiketten dieselben sind, wie während der Identifizierung des vorhergehenden Etiketts.

18. Verfahren gemäß einem der vorhergehenden Ansprüche, **dadurch gekennzeichnet, daß** die Befragung der Etiketten einen Schritt des Einschreibens in den Code der Etiketten umfaßt.

19. Verfahren gemäß einem der vorhergehenden Ansprüche, **dadurch gekennzeichnet, daß** die Befragung der Etiketten an einer anderen als der ersten Position des Codes beginnt.

20. Station zur Fernidentifikation von elektronischen Etiketten (9), die jeweils einen eigenen Code aufweisen, welcher durch eine Anzahl von Zeichen an einer Anzahl von Positionen und einen index, welcher eine Position in diesem Code angibt, gebildet wird, insbesondere zur Durchführung des Verfahrens gemäß einem der Ansprüche 1 bis 19, umfassend Mittel (6, 7) zur Aussendung von Fragen an die Etiketten, Mittel zum Empfangen (10, 11) der Antworten der Etiketten und Steuerungsmittel (8) zur Steuerung der Fragen umfassend:

- eine Frage, welche die Etiketten in einen Analysebeginnzustand (D) versetzt;

- eine Frage zur Weiterschaltung (A) der Position des Indexes der Etiketten;

- mindestens eine Frage, die das Bestimmen der Gegenwart eines gegebenen Zeichens an einer Position des Codes der Etiketten entsprechend dem Index gestattet.

21. Station gemäß Anspruch 20, **dadurch gekennzeichnet, daß** die Fragen so viele Fragen (0), ... (9), (N), welche die Bestimmung der Gegenwart eines gegebenen Zeichens an einer Position des Codes der Etiketten entsprechend dem Index gestatten, umfassen, wie Zeichen in der Basis der Zeichen des Codes der Etiketten existieren.

22. Station gemäß Anspruch 20 oder 21, **dadurch gekennzeichnet, daß** die Fragen unter anderem Fragen umfassen, die es gestatten zu bestimmen, ob ein gegebenes Zeichen an einer Position des Codes der Etiketten entsprechend dem Index in einer Gruppe erscheint.

23. Station gemäß Anspruch 20, 21 oder 22, **dadurch gekennzeichnet, daß** die Mittel zum Empfangen (10, 11) der Antworten der Etiketten Mittel zur Definition von unterschiedlichen Empfangszeitzonen zum Empfangen der Antworten entsprechend den unterschiedlichen Zeichenwerten der Etiketten umfassen.

24. Station gemäß einem der Ansprüche 20 bis 23, **dadurch gekennzeichnet, daß** die Fragen eine Frage (B) des Blockierens der Etiketten umfassen.

**25.** Station gemäß einem der Ansprüche 20 bis 24, **dadurch gekennzeichnet, daß** die Fragen eine Frage (Z) des Zurücksetzens des Indexesder Etiketten auf Null und des Testens der Gegenwart der nicht blockierten Etiketten umfassen.

**26.** Station gemäß einem der Ansprüche 20 bis 25, **dadurch gekennzeichnet, daß** die Fragen eine Frage (R) zum Zurückgehen um eine Position des Indexes der Etiketten umfassen.

**27.** Station gemäß einem der Ansprüche 20 bis 26, **dadurch gekennzeichnet, daß** die Steuerungsmittel Mittel zur Speicherung der Fragen umfassen, die die Bestimmung der Gegenwart eines gegebenen Zeichens an einer Position des Codes der Etiketten entsprechend dem Index gestatten, für welche keine Antwort von den Etiketten erhalten wurde.

**28.** Elektronisches Etikett mit Mitteln zur Kommunikation mit einer Station zum Empfangen von Fragen der Station und zum Aussenden von Antworten an die Station, Mitteln zur Steuerung und zur Speicherung eines aus Zeichen gebildeten Codes, insbesondere zur Durchführung des Verfahrens gemäß einem der Ansprüche 1 bis 19, wobei das Etikett mindestens einen ersten Zustand des Blockierens, einen zweiten Zustand des zeitweiligen Blockierens und einen dritten Zustand, in welchem es Antworten aussenden kann, aufweist, und wobei das Etikett einen Index umfaßt, der eine Position in seinem Code angibt, und wobei die Mittel zur Steuerung es gestatten, den Index auf Anfrage der Station zu ändern und auf Anfrage der Station ein Signal auszusenden, welches die Gegenwart eines gegebenen Zeichens an einer Position des Codes entsprechend dem Index anzeigt.

**29.** Elektronisches Etikett gemäß Anspruch 28, **dadurch gekennzeichnet, daß** die Mittel zur Steuerung Mittel zur zeitlichen Beeinflussung der Antworten abhängig von dem an der durch den Index definierten Adresse gelesenen Zeichen umfassen, so daß die Sendezeitzonen den unterschiedlichen Werten des Zeichens entsprechen.

**30.** Elektronisches Etikett gemäß Anspruch 28 oder 29, **dadurch gekennzeichnet, daß** es einen Speicher zur Speicherung einer Position seines Codes abhängig von der Position des ersten nicht erkannten Zeichens umfaßt.

**31.** Elektronisches Etikett gemäß einem der Ansprüche 28 bis 30, **dadurch gekennzeichnet, daß** die Mittel zur Speicherung des Codes einen Bereich zum Speichern aufweisen, der die Größe eines Teil des geschützten Codes wiedergibt.

**32.** Elektronisches Etikett gemäß Anspruch 31, **dadurch gekennzeichnet, daß** der Speicherbereich nur ein einziges Mal veränderbar ist.

**33.** Kombination einer Station gemäß einem der Ansprüche 20 bis 27 und mindestens einem Etikett gemäß einem der Ansprüche 28 bis 32.

**Claims**

**1.** A method for remotely identifying electronic tags (9), each of said tags having its own code constituted by a plurality of digits and a plurality of ranks, from a station, in which identification of a tag comprises the steps of:

- (a) for one rank of the code, determining if tags having a possible digit at one rank of their code exist;
- (b) for this rank, if the rank is prior to the last rank, if there does exist one for a given digit, storing this digit, temporarily blocking other tags not having this digit at this given rank, and returning to step (a) for the next rank;
- (c) if this rank is the last rank, if there does exist one for a given digit, storing this digit, and reconstructing the tag 's code using the stored digits.

**2.** The method according to claim 1, **characterized in that** the step consisting in determining if tags exist having one possible digit at a digit position of their code comprises polling said tags for the presence of a digit at said digit position of said code by sending from a station successive test interrogations to said tags .

**3.** The method according to claim 1, **characterized in that** the step consisting in determining if tags exist having one possible digit at a digit position of their code comprises polling said tags from a station, each of said tags issuing a response within a time window that is a function of a digit its code carries at this digit position.

4. The method according to claim 3, **characterized in that** step (**b**) is implemented as soon as a station has received at least one response, without waiting for other responses.

5. The method according to one of claims 1 to 4, **characterized in that** the step consisting in determining if tags exist having one of the possible digits at a digit position in their code comprises:

- determining if tags exist having, at a digit position in their code, a digit that is comprised in a set of digits;
- if such tags do exist, then determining whether tags exist having one of the digits of said set at said digit position in their code; and
- if such tags do not exist, determining if tags exist having one of the digits of the complementary set of said set at this digit position of their code.

6. The method according to claim 5, **characterized in that** said set contains half of the possible digits.

7. The method according to claim 5 or 6, **characterized in that** said code comprises digits to abase 10, and in which said set of digits comprises the digits {0, 1, 2, 3, 4} or {5, 6, 7, 8, 9}.

8. The method according to one of claims 1 to 4, **characterized in that** the step consisting in determining if tags exist having one of the possible digits at a digit position in their code comprises:

- at least two steps consisting in determining whether tags exist that have, at a digit position in their code, a digit that is comprised in a set of digits, the cardinal number of a set in one of said steps being lower than the cardinal number of the set in the preceding step;
- a step consisting in determining if tags exist having one of the digits in a set corresponding to the last of said two steps.

9. The method according to claim 8, **characterized in that** said code comprises digits to the base 10, the method comprising:

- a step for determining if tags exist having, at a digit position in their code, a digit comprised in the set {1, 2, 3, 4};
- if a result of this first step is positive, a step consisting in determining if tags exist having, at a digit position in their code, one of the digits of the sets {0, 1, 2}, {3, 4};
- if a result of said first step is negative, a step consisting in determining if tags exist having one of the digits of the sets {5, 6}, {7, 8, 9}.

10. The method according to one of the preceding claims, comprising, during or after step (c) a step (d) consisting in unblocking temporarily blocked tags, blocking a tag the code of which has been reconstituted, and returning to a first digit position,

- and then proceeding to step (a) for identifying a next tag.

11. The method according to one of claims 1 to 9, **characterized in that** step (c) additionally comprises blocking a tag the code of which has been reconstituted.

12. The method according to claim 11, **characterized in that** said method then comprises repeating steps (a) and (c) in order to identify other tags which only differ in their last digit.

13. The method according to claim 11 or 12, comprising the steps consisting of:

- (e) returning to a previous digit position, and unblocking those tags which were temporarily blocked at said previous digit position;
- (f) determining if tags exist having one of possible digits at this digit position in their code; and returning to step (b) if such tags exist, and otherwise, proceeding to step (e).

14. The method according to claim 13, **characterized in that** there are a limited number of successive iterations covering steps (e) and (f) and **characterized in that**, when this limited number is reached, a step (g) is implemented consisting in unblocking tags that were temporarily blocked, and returning to a first digit position,

- and then proceeding to step (a) for identifying a next tag.

15. The method according to one of claims 2 to 14, **characterized in that**, when identifying a tag, said station does not again repeat polling operations for which is has received no reply from tags during preceding tag identification steps.

16. The method according to one of claims 3 to 15, **characterized in that** during identification of a tag, said station does not send interrogation signals corresponding to time windows in which it received no reply from tags during preceding tag interrogation steps.

17. Method according to one of claims 2 to 16, **characterized in that** during identification of a tag, said station sends successive test interrogations to said tags for the presence, at a given tag digit position, of a digit of a corresponding digit position in the code of a previously identified tag, as long as responses from tags are the same as those when a preceding tag was being identified.

18. The method according to any one of the preceding claims, **characterized in that** the step of polling tags includes a step of writing into tag codes.

19. The method according to any one of the preceding claims, **characterized in that** polling of said tags starts at a digit position in said code which is not the first.

20. A station for remotely identifying electronic tags (9) each having their own code constituted by a plurality of digits at a plurality of ranks and an index representing a digit position in said code, notably for carrying out the method according to any one of claims 1 to 19, comprising means (6, 7) for sending polling signals to said tags, means (1, 11) for receiving responses from said tags, and control means (8) controlling the polling, comprising:

- an interrogation that sets the tags to start-off-analysis (D);
- an interrogation (A) for advancing an index position in said tags;
- at least one interrogation for determining whether a given digit at a digit position in said code corresponding to said index is present in said tags.

21. The station according to claim 20, **characterized in that** said interrogations comprise the same number of interrogations (0), ..... (9), (N) for determining the presence of a given digit at a digit position corresponding to an index of said code in said tags as there are digits in a base of the code used for said tags.

22. The station according to claim 20 or 21, **characterized in that** said interrogations further comprise interrogations making it possible to determine if a digit at a tag code digit position corresponding to said index belongs to a set.

23. The station according to claim 20, 21 or 22, **characterized in that** said means (10 11) for receiving responses from tags comprise means for defining differing reception time intervals in order to receive responses corresponding to different values of tag digits.

24. The station according to one of claims 20 to 23, **characterized in that** said polling signals comprise an instruction (B) for blocking tags.

25. The station according to one of claims 20 to 24, **characterized in that** said polling signals include an instruction for setting a tag index to zero and a test polling signal for detecting the presence of tags that are not blocked.

26. The station according to one of claims 20 to 25, **characterized in that** said polling signals include an instruction (R) for decrementing by 1 a digit position index of said tags.

27. The station according to one of claims 20 to 26, **characterized in that** said control means comprise means for storing polling signals making it possible to determine the presence of a given digit at a digit position of a tag code corresponding to an index for which no response from said tags is received.

28. An electronic tag having means for communicating with a station for receiving polling signals from said station and for sending responses to said station, means for controlling and storing a code constituted by a plurality of digits at a plurality of ranks, notably for carrying out the method according to any one of claims 1 to 19, said tag having at least one first blocked state, one second temporarily blocked state, and a third state in which it can send responses, said tag comprising an index representing a digit position within a code of said tag, and said control means allowing said index to be changed upon polling of the station and a signal to be sent indicating the presence of a given digit by polling at the rank of the code corresponding to said index.

29. The electronic tag according to claim 28, **characterized in that** said control means comprise means for timing responses as a function of a digit read at an address defined by said index, whereby specific send time intervals correspond to various values of said digit.

30. An electronic tag according to one of claims 28 or 29, comprising a memory for storing a rank of its code, corresponding to the rank of the first unrecognised digit.

31. The electronic tag according to one of claims 28-30, **characterized in that** said code storage means include a storage region that is representative of the size of a portion of a protected code.

32. The electronic tag according to claim 31, **characterized in that** said storage region can only be modified once.

33. A combination of a station according to any one of claims 20 to 27 and at least one tag according to any one of claims 28 to 32.

FIG. 1

FIG. 2

FIG. 3

FIG. 4

FIG. 5

FIG. 6